# EUROPÄISCHE PATENTANMELDUNG

(11) **EP 3 949 736 A1**
(43) Veröffentlichungstag der Anmeldung: **09.02.2022**
(21) Anmeldenummer: 20189686.7
(22) Anmeldetag: 05.08.2020
(51) Int. Cl.: A01N 59/16, A01N 59/00, A01N 25/08, A01N 25/26, A01P 1/00, C09D 5/14

(54) **PARTIKULÄRES ANTIMIKROBIELLES HYBRIDSYSTEM**

(71) Anmelder: AGXX Intellectual Property Holding GmbH, 14169 Berlin (DE)
(72) Erfinder: Landau, Uwe, 14169 Berlin (DE); Meyer, Carsten, 10589 Berlin (DE); Wagner, Olaf, 12163 Berlin (DE)
(74) Vertreter: Remus, Alvaro Johannes

(57) **Zusammenfassung**

Die Erfindung betrifft ein Hybridmaterial, das insbesondere als Additiv in Verbindung mit Materialien, Werkstoffen und/oder Beschichtungsmaterialien zur Erzeugung einer antimikrobiellen, antiviralen und/oder fungiziden Wirkung vorgesehen ist, und das Partikel umfasst, die jeweils mindestens ein Trägermaterial umfassen, das zumindest teilweise mit mindestens zwei unterschiedlichen Metallen beschichtet ist, wobei ein erstes Metall als clusterförmige, nanoporöse und/oder mikrorissige Schicht zumindest teilweise auf ein zweites Metall aufgebracht ist, oder wobei ein zweites Metall als clusterförmige, nanoporöse und/oder mikrorissige Schicht zumindest teilweise auf ein erstes Metall aufgebracht ist. Erfindungsgemäß umfasst das erste Metall mindestens ein Übergangsmetallelement, das über mehrere Oxydationsstufen verfügt und über katalytisch aktive Zentren einen Wechsel der Oxidationsstufen erlaubt, und das zweite Metall mindestens einen elektrisch leitfähigen Silberhalbleiter umfasst, wobei die beiden Metallschichten zumindest mit ihren jeweiligen Oberflächen miteinander in elektrisch leitendem Kontakt stehen und dadurch eine antimikrobielle, antivirale und/oder fungizide Wirkung entfalten, wobei das Trägermaterial mindestens ein an den Werkstoff und/oder das Beschichtungsmaterial und deren Verwendung angepasstes Material umfasst. Das erfindungsgemäße Hybridmaterial kann in vorteilhafter Weise als antimikrobielles Additiv für diverse Werkstoffe und/oder Beschichtungsmaterialien, vorzugsweise Lacke, Farben, Putze, Polymere und/oder Cellulose, eingesetzt werden.

## Beschreibung

### Hintergrund der Erfindung

Die Erfindung betrifft ein Hybridmaterial, das insbesondere als Additiv in Verbindung mit Materialien, Werkstoffen und/oder Beschichtungsmaterialien zur Erzeugung einer antimikrobiellen, antiviralen und/oder fungiziden Wirkung vorgesehen ist, und das Partikel umfasst, die jeweils mindestens ein Trägermaterial umfassen, das zumindest teilweise mit mindestens zwei unterschiedlichen Metallen beschichtet ist, wobei ein erstes Metall als clusterförmige, nanoporöse und/oder mikrorissige Schicht zumindest teilweise auf ein zweites Metall aufgebracht ist, oder wobei ein zweites Metall als clusterförmige, nanoporöse und/oder mikrorissige Schicht zumindest teilweise auf ein erstes Metall aufgebracht ist. Die Erfindung betrifft ferner ein Verfahren zur Herstellung eines partikulären Hybridmaterials mit antimikrobieller Wirkung sowie die Verwendung eines solchen partikulären Hybridmaterials.

Additive müssen i.d.R. eine Reihe von Eigenschaften besitzen, die basierend auf einem Grundwerkstoff alleine häufig nicht erreicht werden können. Mittels Oberflächentechnik können gewünschte Eigenschaftsprofile eingestellt werden. Häufig werden dabei Eigenschaften benötigt, die nicht durch ein Material allein, sondern nur durch mehrere Oberflächenmaterialien, bestehend aus unterschiedlichen Komponenten, erreicht werden können. Solche Mehrkomponentensysteme werden auch als hybride Werkstoff- bzw. Materialsysteme bezeichnet.

Antimikrobiell ausgestattete Vorrichtungen bzw. Produkte werden in sensiblen Bereichen, z. B. in der Medizin- und Hygienetechnik oder Lebensmittelverarbeitung bereits seit längerem eingesetzt. Die aktuelle SARS-CoV-2 Pandemie, aber auch viele vorausgegangene Epidemien haben das Thema Hygiene und Schutz vor pathogenen Mikroorganismen ganz weit in das Bewusstsein der Bevölkerung gerückt und das antimikrobielle Schutzbedürfnis auf alle Lebensbereiche ausgeweitet. Die aktuelle Situation macht aufgrund der gewaltigen negativen Auswirkungen auf die Weltwirtschaft deutlich, welche Bedeutung antimikrobieller Schutz besitzt und dass der Bedarf an hochwirksamen antimikrobiellen Schutzmaterialien erheblich steigen wird. Gerade für Gegenstände, die vielfach berührt werden oder als antimikrobielle Schutzausrüstungen, wie z.B. Mundschutzmasken, dienen, werden zunehmend leistungsfähigere und langlebigere antimikrobielle Systeme benötigt, die gut verarbeitet und in Produkte integriert werden können.

### Stand der Technik

Bisherige Lösungen im Bereich der antimikrobiell wirksamen Additive beschränken sich auf den Einsatz von herkömmlichen bioziden Substanzen, die durch Auslaugen freigesetzt werden. Hierbei werden oligodynamische Metalle wie Silber, Kupfer oder Zink, deren chemische Modifikationen, organische Substanzen wie Triclosan und Isothiazolinone sowie metallorganische Substanzen wie Zinkpyrithion eingesetzt. Diese Substanzen werden in einem Depot in die Trägermatrix eingelagert. Ist das Depot erschöpft, so ist die antimikrobielle Wirkung des Trägermaterials nicht mehr gegeben. Neue Entwicklungen auf dem Gebiet der antimikrobiell wirksamen Zusätze beziehen sich meist auf die Herstellung von Partikeln für die Pulverbeschichtung, auf eine verbesserte Dispergierung von Bioziden in einer polymeren Trägermatrix, auf die Vermeidung von Verfärbungen der Trägermatrix durch die beigemengten Biozide sowie auf die kontrollierte Freisetzung der bioziden Wirkstoffe durch Verkapselung. Von zukunftsfähigen antimikrobiellen Systemen wird aber erwartet, dass sie eine ausreichende spontane Wirkung entfalten, um das Wachstum von Mikroorganismen zu verhindern und gleichzeitig über lange Zeiträume hinweg durch langsames Freisetzen toxikologisch und ökotoxikologisch verträglicher Mengen der Wirksubstanz antimikrobiell wirksam sind.

Aus der WO 2008/046513 A2 ist eine bioaktive, Silber, Ruthenium und ein Vitamin enthaltende metallische Beschichtung bekannt, die zur Entkeimung, Desinfektion und Dekontamination von Wasser oder wässrigen Lösungen verwendet wird. Die Kombination von Silber mit Ruthenium und einem Vitamin, beispielsweise Ascorbinsäure, führt zu einer schnelleren und effizienteren Abtötung von Mikroorganismen. Gleichzeitig verhindern diese bioaktiven Metalloberflächen die Besiedelung mit Mikroorganismen und die Anheftung oder stabile Ablagerung von problematischen Biomolekülen wie zum Beispiel DNA, RNA oder Proteinen. Durch die Beschichtung entsteht eine sich selbst reinigende Oberfläche, die bei Kontakt mit Wasser oder wässrigen Lösungen sehr schnell und effizient dessen Keimfreiheit herstellt und über längere Zeiträume aufrechterhält.

Das Patent EP 0 677 989 B1 offenbart die Herstellung eines antimikrobiell wirksamen Pulvers, das als Zusatz für Produkte aus Kunststoff verwendet werden kann. Das Pulver besteht aus einem Kern aus anorganischem Material, das mit einem antimikrobiell wirksamen Metall oder einer solchen Metallverbindung beschichtet ist. Eine zweite Beschichtung besteht aus Aluminiumsilikat, Aluminiumoxid, Aluminiumphosphat, Kieselsäure, Silikat, Borosilikat oder aus Mischungen dieser Substanzen. Durch die Porosität der Beschichtung soll die Diffusion antimikrobiell wirksamer Substanzen reguliert werden, so dass eine mögliche Verfärbung der verwendeten Kunststoffe verhindert wird. Eine dritte Beschichtung aus wasserhaltigen Metalloxiden von Aluminium, Magnesium, Zirkonium oder der Seltenen Erden soll die Agglomeration der Partikel reduzieren und deren Dispergierung in den Kunststoffen verbessern. Der Gehalt der antimikrobiellen Beschichtung beträgt 0,05 bis 20 Gew.-% bezogen auf das Trägermaterial. Für die zweite Beschichtung liegt der Gehalt bei 0,5 bis 20 Gew.-%, ebenfalls bezogen auf das Trägermaterial. Das antimikrobiell wirksame Pulver kann einer Vielzahl an aliphatischen oder aromatischen Polymeren beigemengt werden.

Die EP 0 270 129 A2 offenbart ein Verfahren zur Herstellung eines antimikrobiell wirksamen Pulvers auf Basis von Zeolithen sowie dessen Verwendung als Additiv für Harze. Es werden dabei sowohl natürliche als auch synthetische Zeolithe verwendet. Die antimikrobielle Funktion beruht auf dem vollständigen Austausch mit Ammoniumionen sowie mit Ionen der Metalle Silber, Kupfer, Zink, Quecksilber, Zinn, Blei, Bismut, Cadmium, Chrom und Thallium. Der Metallgehalt beträgt für Silber 0,1 bis 15 Gew.-% und für Kupfer oder Zink 0,1 bis 8 Gew.-%.

Das antimikrobiell wirksame Zeolith wird Harzen wie Polyethylen, Polypropylen, Polystyrol oder PVC beigemengt.

Das Patent US 5 147 686 offenbart die Herstellung antimikrobiell wirksamer Pulver unter Verwendung von pulverförmigem Titanoxid als Trägermaterial. Die Pulverpartikel besitzen eine Größe von 0,01 *µm* - 3 *µm*. Die Partikel werden mit einer antimikrobiell wirksamen Beschichtung versehen. Die Beschichtung besteht aus Kupfer, Zink sowie deren Legierungen wie Cu-Zn, Cu-Ag, Cu-Sn, Cu-Al, Zn-Sn, Zn-Sn-Cu, Zn-Al-Cu-Mg oder ähnlichen Legierungen. Der Metallgehalt beträgt 0,001 bis 35 Gew.-%. Die Beschichtung erfolgt durch außenstromlose Abscheidung, wobei die Oberfläche der Trägerpartikel zunächst mit Palladium oder Zinn aktiviert wird. Das Pulver zeichnet sich neben seinen antimikrobiellen Eigenschaften als Additiv in verschiedenen Medien aus.

Die US 2016/0369405 A1 offenbart ein Verfahren zur Herstellung von mit Metall beschichteten Partikeln in einer Flüssigkeit. Als Basispartikel dienen Partikel aus Silikon, Zinn, Germanium, Gallium, Blei, Zink, Aluminium oder Carbon, die in einem Reaktor mit einem Metall beschichtet werden, wobei es sich bei dem Metall um elementares Silber, Kupfer, Platin, Palladium, Eisen, Kobalt, Rhodium, Nickel, Vanadium, Ruthenium, Iridium oder Gold handelt. Zur Einleitung der Beschichtungsreaktion wird ein Reduktionsmittel, beispielsweise Ascorbinsäure, eingesetzt. Insbesondere wird die Herstellung und Verwendung von mit Silber beschichteten Silikonpartikeln beschrieben.

Auch Materialien, die in einer Partikelform in Produkte bzw. Materialien eingearbeitet werden, um die benötigten Produkteigenschaften sicherzustellen bzw. zu erhöhen, werden ebenfalls als hybride Systeme mit verschiedenen Oberflächenzusammensetzungen und -strukturen ausgestaltet, um sie in andere Werkstoffe zu integrieren, damit sie dort ihre spezifischen Partikeleigenschaften in der gesuchten Weise vermitteln. Mehrkomponentige hybride Partikelsysteme sind daher auf den gewünschten Werkstoff und die geforderten Materialeigenschaften gezielt durch die richtige Wahl des Partikelmaterials, der Partikelgröße und -struktur sowie zusätzlich aufgebrachter Schichtsysteme oder durch chemische Nachbehandlungen einer oder mehrerer Komponenten des hybriden Partikelsystems anzupassen. Das gilt auch für partikuläre Systeme mit antimikrobiellen Eigenschaften, die diese antimikrobiellen Eigenschaften in Produkte oder Materialien einbringen sollen. Allerdings besteht die Gefahr, dass bei der Partikel-Verarbeitung oder Partikel-Werkstoffintegration deren gewünschte Kerneigenschaft - die antimikrobielle Wirkung - geschwächt oder sogar verloren geht.

### Zusammenfassung der Erfindung

Es ist Aufgabe der Erfindung, ein antimikrobiell wirksames partikuläres Hybridmaterial zu entwickeln, dass seine antimikrobielle Eigenschaft auch nach der Verarbeitung, der Werkstoffintegration und/oder als Additiv in Produkten aufrechterhalten kann.

Erfindungsgemäß wird die Aufgabe durch ein Hybridmaterial der eingangs genannten Art gelöst, bei dem das erste Metall mindestens ein Übergangsmetallelement umfasst, das über mehrere Oxydationsstufen verfügt und über katalytisch aktive Zentren einen Wechsel der Oxidationsstufen erlaubt, und das zweite Metall mindestens einen elektrisch leitfähigen Silberhalbleiter umfasst, wobei die beiden Metallschichten zumindest mit ihren jeweiligen Oberflächen miteinander in elektrisch leitendem Kontakt stehen und dadurch eine antimikrobielle, antivirale und/oder fungizide Wirkung entfalten, wobei das Trägermaterial mindestens ein an den Werkstoff und/oder das Beschichtungsmaterial und deren Verwendung angepasstes Material umfasst. Insgesamt stellt die Erfindung damit ein hybrides, anpassungsfähiges partikuläres Mehrkomponentensystem aus unterschiedlichen Materialien zur Verfügung, das seine breitbandige antimikrobielle Wirksamkeit (die Wirksamkeit gegen Bakterien, Viren, Pilze und sonstige Mikroorganismen wird im Folgenden zur Vereinfachung als "antimikrobiell" bezeichnet) in die unterschiedlichsten Werkstoffe und/oder Beschichtungsmaterialien transportieren kann, ohne dass die antimikrobielle Eigenschaft im Verarbeitungsprozess, der Werkstoffintegration oder dem gebrauchsfertigen Produkt verloren geht. Die Materialkomponenten, die für die Verarbeitungsprozesse bzw. die Materialintegration und die Nutzung des fertigen antimikrobiellen Produktes gebraucht werden, insbesondere das Trägermaterial, sind so ausgewählt, dass sie die antimikrobielle Eigenschaft des hybriden, partikulären Systems nicht negativ beeinflussen, sondern eher noch stärken. Das erfindungsgemäße Hybridmaterial ist darüber hinaus ein antimikrobiell wirkendes Partikelsystem, das, einstellbar über den hybriden Partikelaufbau, für die Verwendung mit unterschiedlichen Produkten oder Vormaterialien bzw. Werkstoffen und/oder Beschichtungsmaterialien geeignet ist. Dabei kann das erfindungsgemäße Hybridmaterial beispielsweise in den Werkstoff und/oder das Beschichtungsmaterial integriert sein. Durch die Kombination mit dem hybriden Partikelsystem wird dem Produkt oder Vormaterial eine antimikrobielle Eigenschaft vermittelt, wobei das Trägermaterial mindestens ein Material umfasst, das derart ausgewählt, ausgestaltet und/oder modifiziert ist, dass das erfindungsgemäße Hybridmaterial optimal an den Werkstoff und/oder das Beschichtungsmaterial und dessen Verwendung angepasst ist. Neben der Aufrechterhaltung der antimikrobiellen Wirkung liegt also ein weiterer Vorteil des erfindungsgemäßen Hybridmaterials darin, dass es beispielsweise durch die richtige Wahl des Partikelmaterials, der Partikelgröße und -struktur sowie zusätzlich aufgebrachte Schichtsysteme oder durch chemische Nachbehandlungen einer oder mehrerer Komponenten des hybriden Partikelsystems gezielt an den Werkstoff und/oder das Beschichtungsmaterial und die geforderten Materialeigenschaften sowie die gewünschten Anwendungen derselben anpassbar ist.

Als primäre Schichten sind auf dem Trägermaterial zwei Metalle abgeschieden, die über eine hohe chemische Stabilität verfügen und unterschiedliche elektrochemische Potentiale besitzen. Vorzugsweise handelt es sich um Übergangsmetalle der d-Gruppe, vorzugsweise um Edelmetalle. Die erfindungsgemäße Metallkombination ist so auf dem Trägermaterial aufgebracht, dass beide Metalle miteinander in elektrisch leitendem Kontakt stehen und in Form einer Vielzahl von über die wässrige Phase kurzgeschlossenen nano- bzw. mikrogalvanischen Elementen auf der Trägeroberfläche verteilt sind. Die vorliegende Erfindung umfasst somit in vorteilhafter Weise eine antimikrobiell wirksame Metallbeschichtung, die jeweils aus einer halbleitenden, katalytisch aktiven Übergangsmetallverbindung (Halbelement I eines galvanischen Elementes) und einer halbleitenden, schwer löslichen Silberverbindung (z. B. Silbersulfid, Silber-Halogen-Verbindungen oder Kombinationen daraus; Halbelement II des galvanischen Elementes) besteht, wobei beide miteinander in direktem, elektrisch leitenden Kontakt stehen. Das Übergangsmetallelement des ersten Halbelements ist dabei so ausgewählt, dass es über mehrere Oxydationsstufen verfügt und damit über katalytisch aktive Zentren einen (relativ leichten) Wechsel der Oxidationsstufen erlaubt. Besonders geeignete Halbelemente sind also solche, die mehrere Wertigkeiten aufweisen und an denen über einen großen Potentialbereich hoch reversible Redox-Reaktionen ablaufen können. Die hohe katalytische Aktivität solcher Halbelemente für die Sauerstoffreduktion ist dabei auf den leichten Wechsel der Oxydationsstufen sowie den leichten Sauerstoffaustausch zurückzuführen, die an den aktiven Zentren der Halbleiteroberfläche bevorzugt stattfinden. Dabei wird das Übergangsmetallelement nur in seiner Wertigkeit verändert, wodurch die eigentliche Redox-Reaktion entsteht. Deshalb wird keine Übergangsmetallverbindung verbraucht oder gebildet, sondern nur die Oxidationsstufen verändert. Die Übergangsmetallverbindung bindet den molekularen Sauerstoff, wodurch dieser katalytisch reduziert werden kann. Deshalb ist das Vorhandensein von mehreren Wertigkeiten Voraussetzung für die katalytische Wirkung und die Redox-Reaktion. Es muss also keine Übergangsmetallverbindung gebildet werden. Spezielle Metalloxide bzw. Metallsulfide und schwer lösliche Silberverbindungen weisen katalytische Eigenschaften, eine elektrische Leitfähigkeit und eine hohe Stabilität in Wasser auf. Durch geeignete Materialkombination sind zwei Metalle miteinander im elektrischen Kontakt, die ein unterschiedliches elektrochemisches Potential besitzen und somit eine galvanische Zelle bilden. Wird diese Zelle über die wässrige Phase kurzgeschlossen, entsteht aufgrund der geringen Distanz (µm-Bereich) zwischen den beiden sich kontaktierenden Metallen eine hohe elektrische Feldstärke. Diese trägt signifikant zur Keimabtötung bei. An beiden Elektroden des mikrogalvanischen Elementes laufen dabei Redox-Reaktionen ab, die jede für sich zu einer Abtötung der Mikroorganismen führen. Am ersten Halbelement (Kathode) wird molekularer Sauerstoff zu Sauerstoffradikalen reduziert, die dann toxisch auf die Mikroorganismen wirken. Am zweiten Halbelement (Anode) werden Elektronen von den Mikroorganismen an den Silberhalbleiter abgegeben und diese dadurch oxidativ zerstört.

Die beiden Metalle (Halbelemente) sind als Schichtsystem auf der Oberfläche des partikulären Trägers (Trägermaterial) aufgebracht, wobei die Schicht des einen Metalls zumindest teilweise über der des anderen Metalls liegt. Dabei kann die jeweils obere Schicht porös (insbesondere nanoporös) bzw. mikrorissig, insbesondere clusterförmig, auf das andere Metall aufgetragen bzw. auf diesem abgeschieden sein, so dass die wässrige Lösung bzw. die Feuchtigkeit Zugang zu beiden Halbelementen hat und das galvanische Element kurzgeschlossen wird. Die elektrochemische Potentialdifferenz der auf dem Trägermaterial abgeschiedenen Übergangsmetalle des hybriden Systems ist dabei so eingestellt, dass durch Redox-Prozesse der in der feuchten Umgebung befindliche Sauerstoff reduziert und antimikrobiell aktive Sauerstoffradikale gebildet werden können. Das erfindungsgemäße hybride antimikrobielle Partikelsystem, dessen antimikrobielle Wirksamkeit nicht auf der Abgabe von Bioziden oder Metallionen, sondern auf der katalytisch unterstützten Erzeugung von Sauerstoffradikalen, vorzugsweise an einer Edelmetallkombination von Silber-Ruthenium, beruht, verändert seine Zusammensetzung auch bei langzeitiger antimikrobieller Anwendung nicht und benötigt im Gegensatz zu Bioziden oder oligodynamischen Metallen kein Depot oder die Biozid- bzw. Metallionenabgabe regulierende Vorrichtungen.

Anders als bei den Bioziden und oligodynamischen Metallen, die für ihre Wirksamkeit toxische Stoffe in die Umwelt abgeben müssen, entsteht bei der Verwendung des erfindungsgemäßen Hybridmaterials aus den gebildeten Sauerstoffradikalen am Ende nur Wasser. Da es sich bei der Metallkombination um ein katalytisch unterstütztes System handelt, ist deren antimikrobielle Wirkung in vorteilhafter Weise ausschließlich von der aktiven Oberfläche und nicht wie bei Bioziden oder den oligodynamischen Systemen (Silber, Kupfer und Zink bzw. deren Salze oder Verbindungen) von deren Menge und Auslaugungsgeschwindigkeit abhängig.

In vorteilhafter Ausgestaltung der Erfindung ist vorgesehen, dass das Trägermaterial mindestens ein Material umfasst, das aus der Gruppe bestehend aus Cellulose, Glas, Metall oder einer Metalllegierung, Metalloxid (z.B. TiO₂), Keramik, Graphit und einem Polymer ausgewählt ist. Das erfindungsgemäße Hybridmaterial kann durch die Wahl des Trägermaterials hinsichtlich der Integrationsanforderungen in andere Materialien sowie der spezifischen Gebrauchsanwendungen gezielt eingestellt werden. Beispielsweise in Bezug auf Temperaturbelastbarkeit bei Integration in z. B. Kunststoffe (z. B. Silber-Partikel als Carrier), Wasseraufnahme/Saugfähigkeit (z. B. Cellulose als Carrier), magnetische Partikel, z. B. für analytische oder Produktions-Anwendungen in Apparaturen, aus denen die Partikelentfernung nur von außerhalb mit einem Magneten möglich ist (Eisenpartikel als Carrier), Cellulose-Integration in einem Lyocel-Prozess, bei dem die mit dem erfindungsgemäßen Hybridmaterial dotierte Cellulose sich in der organischen Cellulose-Lösung auflöst und die Hybridmaterial-Partikel fein in dem Cellulose-Brei verteilt, aus dem dann Cellulose Fäden gesponnen werden können, oder Farbgestaltung (z. B. weiße Farbe: Carrier Cellulose). Überraschenderweise hat sich bei einer der erfindungsmäßigen Ausführungen des antimikrobiellen Hybridsystems durch die Auswahl von Cellulose als Trägermaterial eine neue Herstellmöglichkeit von antimikrobiellen Textilfasern und Folien ergeben.

Beispielsweise kann als Trägermaterial Cellulose (C)- oder deren Derivate als mikrokristallines (MCC) oder nanokristallines Cellulosepulver (NCC) verwendet werden, die eine Reihe inhärenter Eigenschaften mitbringen, die die antimikrobielle Wirkung des hybriden Partikelsystems unterstützen, wie z. B. ihre Hydrophilie und eine hohe Wasserbindungskapazität, die im trockenen Zustand noch etwa 5-8 % beträgt. Die Cellulosefasern können nicht nur in der Faserlänge, sondern auch im Faserquerschnitt variiert werden, wodurch die Faseroberfläche erheblich vergrößert werden kann. So stehen neben der im Querschnitt wolkenförmigen "Standardcellulose" auch Fasern mit stern- (Trilobal)- oder Buchstaben-ähnlichen (Umberto)- Querschnitten zur Verfügung. Die Cellulose-Trägeroberfläche kann auch durch sogenannte Bakterielle Cellulose (BC) aufgrund ihrer gewebeähnlichen, feinen Netzwerkstruktur deutlich vergrößert werden. BC besitzt darüber hinaus eine erhöhte Wasseraufnahmekapazität und wird deshalb gern in medizinischen Anwendungen eingesetzt.

Bei der Cellulose handelt es sich um das am häufigsten vorkommende Biopolymer auf der Erde mit einer Bildungsrate von 1,5 Billionen Tonnen jährlich und damit um den global bedeutendsten nachwachsenden Rohstoff. Cellulose wird neben der Textil-, Papier- und Baustoffindustrie auch im Medizinbereich eingesetzt. Die weite Verbreitung des Einsatzes von Cellulose-Werkstoffen, insbesondere deren Einsatz für medizinische Anwendungen, haben zur Entwicklung von antimikrobiell ausgerüsteten Cellulose-Partikeln geführt. Cellulose selbst verfügt über keine antimikrobielle Aktivität, die Infektionen verhindern könnte. Die Mehrzahl der Arbeiten zur Herstellung antimikrobieller Cellulose hat sich bisher mit dem Einbringen von biozidal wirkenden Nano-Silberpartikeln auf bzw. in die Cellulosefasern durch verschiedene Abscheidungsprozesse beschäftigt. Überraschenderweise ist es im Rahmen der vorliegenden Erfindung gelungen, neben Silber auch Ruthenium haftfest auf der Cellulose abzuscheiden. Dabei wurde auf die erfindungsgemäße Weise erreicht, dass die katalytisch unterstützte Sauerstoffradikalbildung an den Silber-Ruthenium-Niederschlägen auch auf dem Cellulose-Träger gegeben ist.

In weiterer vorteilhafter Ausgestaltung der Erfindung ist vorgesehen, dass das Hybridmaterial mit organischen Polymeren, vorzugsweise Polyethylenglycol (PEG), Polydopamin und/oder Chitosan, und/oder mit Ascorbinsäure oder Ascorbinsäurederivaten modifiziert ist. Dabei kann die Modifikation durch eine Vorbehandlung des Trägermaterials vor dem Aufbringen der Metallschichten, beispielsweise zur Erleichterung der Beschichtung, und/oder eine Nachbehandlung des Hybridmaterials nach dem Aufbringen der Metallschichten erfolgen. Auf diese Weise können bestimmte Eigenschaften des mit dem erfindungsgemäßen Hybridmaterial dotierten Produkts (Werkstoff und/oder Beschichtungsmaterial) verändert bzw. verbessert werden. So kann beispielsweise die Rieselfähigkeit und/oder Dispergierbarkeit von Partikeln bzw. Pulver durch eine Nachbehandlung des Hybridmaterials mit z.B. Polydopamin oder Propylenglykol (PG) gezielt eingestellt werden.

In vorteilhafter Ausgestaltung der Erfindung ist ferner vorgesehen, dass die Stärke der antimikrobiellen Wirkung durch ein Einstellen der Dicke mindestens einer der beiden Metallschichten, der Menge mindestens eines der beiden Metalle, und/oder der Flächenanteile der beiden Metalle auf der Partikeloberfläche gezielt einstellbar ist. Die antimikrobielle Stärke des gewählten antimikrobiellen Hybridmaterials ist also nicht allein durch Veränderung der Partikelmenge, sondern auch durch Variieren seines Aufbaus einstellbar. Das erfindungsgemäße hybride System kann gezielt hinsichtlich der Stärke seiner antimikrobiellen Wirkung (häufig wird nicht die höchste Wirkung gewünscht, Einstellung per Wachstumskurven) und den Anforderungen an die Verwendung bzw. Integration in andere(n) Materialien sowie für die spezifischen Gebrauchsanwendungen eingestellt werden. Beispielsweise kann durch die Variation des Beschichtungsverfahrens die Dicke der Metallschicht(en) eingestellt werden. Durch die Form des Trägermaterials und/oder das Reduktionsverfahren bei der Beschichtung kann beispielsweise die Struktur der Metallschichten gezielt beeinflusst werden. Die Stärke der antimikrobiellen Wirkung des erfindungsgemäßen Hybridmaterials kann ferner beispielsweise durch den Einsatz einer definierten Menge mindestens eines Metalls (z.B. Anteil des Metalls am gesamten Hybridmaterial in Gew.-%) gezielt eingestellt werden.

In weiterer vorteilhafter Ausgestaltung der Erfindung ist vorgesehen, dass das Übergangsmetallelement mindestens ein Metall aus der Gruppe bestehend aus Ruthenium, Iridium, Vanadium, Mangan, Nickel, Eisen, Zink, Cobalt, Cer, Molybdän und Wolfram ist. Das erste Metall kann dabei mindestens ein entsprechendes Metalloxid, Metalloxyhydrat, Metallhydroxid, Metalloxyhydroxid, Metallhalogenid und/oder mindestens ein Metallsulfid des Übergangsmetallelements umfassen.

In vorteilhafter Ausgestaltung der Erfindung ist ferner vorgesehen, dass der Silberhalbleiter mindestens ein Silberhalogenid oder Silbersulfid umfasst.

In weiterer vorteilhafter Ausgestaltung der Erfindung ist vorgesehen, dass die Partikel sphärisch oder polyedrisch ausgebildet sind und einen mittleren Durchmesser von höchstens 100 µm, vorzugsweise höchstens 50 µm, insbesondere höchstens 5 µm, aufweisen. Beispielsweise können solche kugelförmigen Partikel einen mittleren Durchmesser zwischen 0,1 und 70 µm, vorzugsweise zwischen 0,1 und 50 µm oder 0,1 und 10 µm, insbesondere zwischen 1 und 5 µm, aufweisen. Alternativ oder zusätzlich können die Partikel faserförmig ausgebildet sein und eine mittlere Länge von höchstens 1 mm, vorzugsweise höchstens 100 µm, insbesondere höchstens 75 µm oder höchstens 60 µm, aufweisen. Beispielsweise können solche länglichen Partikel eine mittlere Länge zwischen 0,1 und 100 µm, vorzugsweise zwischen 0,1 und 50 |jm oder 0,1 und 10 µm, insbesondere zwischen 0,1 und 1 µm, aufweisen. Partikelgröße und Form spielen beispielsweise bei Düsenproblemen beim Spinnen von Polymerfäden (z. B. feine Silberpartikel) oder bei geforderter großer Oberfläche (z. B. durch unterschiedliche Cellulosefaser-Querschnitte oder feine Silberpartikel) eine bedeutende Rolle. Da die antimikrobielle Wirkung des erfindungsgemäßen Hybridmaterials auf einem katalytischen Prozess an der Partikeloberfläche beruht, nimmt die Partikeleffizienz bei im Verhältnis zum Partikelvolumen steigendem Oberflächenanteil der Partikel zu. Daher ist die Effizienz der Partikel für kleinere Partikelgrößen besonders vorteilhaft.

Die Erfindung wird ferner durch ein Verfahren zur Herstellung eines Hybridmaterials mit antimikrobieller Wirkung, insbesondere des oben beschriebenen Hybridmaterials, gelöst, welches die folgenden Schritte umfasst:
a) Bereitstellen oder Herstellen eines partikelförmigen Trägermaterials,
b) zumindest teilweises Aufbringen einer ersten Metallschicht auf das Trägermaterial, und
c) zumindest teilweises Aufbringen einer zweiten Metallschicht auf die in Schritt b) aufgebrachte erste Metallschicht, wobei die zweite Metallschicht clusterförmig, nanoporös und/oder mikrorissig auf die erste Metallschicht aufgebracht wird.

Als Trägermaterial kommen prinzipiell alle eingangs erwähnten Materialien in Frage, vorzugsweise Metalle, Metalloxide, Glas, Keramik, Graphit und Polymere. In einer besonderen Ausführungsform wird das antimikrobielle Hybridsystem mit einem magnetisierbaren Partikelkern ausgestattet. Beispielsweise kann die antimikrobielle Beschichtung auf einem ferromagnetischen Kern (z. B. Nickel-, Eisen-, Cobalt-Pulver) abgeschieden werden. Solche antimikrobiellen Hybridsysteme werden z. B. dort benötigt, wo nach Gebrauch der Partikel deren vollständige Entfernung aus schwer zugänglichen Reaktions- oder Analysengefäßen erfolgen muss. Die antimikrobiellen, magnetisierbaren Partikelhybride können von außerhalb des Reaktors mit einem starken Magneten an eine zugängliche Stelle eines Reaktors gezogen werden, wo sie entnommen werden können.

Vorzugsweise wird als erste Metallschicht ein erstes Metall auf das Trägermaterial aufgebracht, welches mindestens einen elektrisch leitfähigen Silberhalbleiter umfasst. Als zweite Metallschicht wird ein zweites Metall auf die erste Metallschicht aufgebracht, welches mindestens ein Übergangsmetallelement umfasst, das über mehrere Oxydationsstufen verfügt und über katalytisch aktive Zentren einen Wechsel der Oxidationsstufen erlaubt. Alternativ kann als erste Metallschicht ein erstes Metall auf das Trägermaterial aufgebracht werden, welches mindestens ein Übergangsmetallelement umfasst, das über mehrere Oxydationsstufen verfügt und über katalytisch aktive Zentren einen Wechsel der Oxidationsstufen erlaubt. Als zweite Metallschicht wird in diesem Fall ein zweites Metall auf die erste Metallschicht aufgebracht, welches mindestens einen elektrisch leitfähigen Silberhalbleiter umfasst. Bei beiden Alternativen wird die zweite Metallschicht derart durchlässig auf die erste Metallschicht aufgebracht, dass die beiden Metallschichten zumindest mit ihren jeweiligen Oberflächen miteinander in elektrisch leitendem Kontakt stehen und dadurch eine antimikrobielle Wirkung entfalten können (siehe oben).

Zur Herstellung eines erfindungsgemäßen Hybridmaterials kann beispielsweise als erste Schicht Silber chemisch-reduktiv auf dem Trägermaterial (z.B. Glaskugeln) abgeschieden werden. Als Silbersalz wird vorzugsweise Silbernitrat (AgNO₃) verwendet. Als Reduktionsmittel können verschiedene Reduktionsmittel eingesetzt werden, beispielsweise Aldehyde, Ascorbinsäure, Metallhydride (vorzugsweise Natriumborhydrid), Hydrazin und/oder ein Hydraziniumsalz, und/oder Hydroxylamin und/oder ein Hydroxylammoniumsalz. Im Fall von Cellulose als Trägermaterial wird vorzugsweise Ascorbinsäure als Reduktor eingesetzt. Dieser erste Schritt kann für den Fall, dass kommerziell verfügbare silberbeschichtete Trägermaterialien (z.B. vorversilberter Glaskugeln) verfügbar sind und verwendet werden, auch entfallen. Auf die Silberschicht kann dann beispielsweise Ruthenium als zweite Schicht ebenfalls chemisch-reduktiv aufgebracht werden. Für die Ruthenium-Beschichtung wird das silberbeschichtete Trägermaterial (z.B. Glaskugeln) in alkalischer Lösung unter starkem Rühren dispergiert. Dann werden Lösungen von Ruthenium(III)chlorid und Natriumborhydrid als Reduktionsmittel zugeführt.

In vorteilhafter Ausgestaltung des erfindungsgemäßen Verfahrens ist vorgesehen, dass das Trägermaterial und/oder die Metallschichten nach Schritt a) und/oder Schritt c) mit organischen Polymeren, vorzugsweise Polyethylenglycol, Polydopamin und/oder Chitosan, und/oder mit Ascorbinsäure oder Ascorbinsäurederivaten modifiziert wird/werden. Folglich kann das Hybridmaterial durch eine Vorbehandlung des Trägermaterials vor dem Aufbringen der Metallschichten, beispielsweise zur Erleichterung der Beschichtung, und/oder eine Nachbehandlung nach dem Aufbringen der Metallschichten modifiziert werden. Auf diese Weise können bestimmte Eigenschaften des mit dem erfindungsgemäßen Hybridmaterial dotierten Produkts (Werkstoff und/oder Beschichtungsmaterial) verändert bzw. verbessert werden. Erfindungsgemäß kann beispielsweise das Trägermaterial mit der antimikrobiellen Metallbeschichtung, ohne oder mit einer chemischen erzeugten Verbindungsschicht (siehe unten), modifiziert werden, um die Eigenschaften des Hybridmaterials zu optimieren. Dies betrifft z.B. die Rieselfähigkeit, Dispergierbarkeit oder die Langzeitstabilität. Erfindungsgemäß bleiben dabei trotz der Modifizierung des hybriden Partikelsystems deren antimikrobielle Eigenschaften erhalten oder werden sogar verbessert.

In weiterer vorteilhafter Ausgestaltung des erfindungsgemäßen Verfahrens ist vorgesehen, dass auf mindestens einer Metallschicht eine Verbindungsschicht erzeugt wird, die mindestens eine Metallverbindung des entsprechenden Metalls umfasst, welche aus der Gruppe bestehend aus Halogeniden, Oxiden und Sulfiden ausgewählt ist. Zur Steigerung der Funktion werden die beiden Metalle dabei mit einer chemisch stabilen Verbindung der Metalle aktiviert. Zu diesem Zweck wird auf den Metallen eine Verbindungsschicht erzeugt, die beispielsweise aus einem Halogenid, Oxid oder Sulfid bestehen kann. Der Einfluss der Nachbehandlung der partikulären Oberflächen kann beispielsweise anhand geeigneter mikrobiologischer Methoden bzw. Messverfahren, wie z.B. durch Wachstumskurven, ermittelt bzw. entsprechend eingestellt werden.

In vorteilhafter Ausgestaltung des erfindungsgemäßen Verfahrens ist ferner vorgesehen, dass die Stärke der antimikrobiellen Wirkung durch ein Einstellen der Dicke mindestens einer der beiden Metallschichten, der Menge mindestens eines der beiden Metalle, und/oder der Flächenanteile der beiden Metalle auf der Partikeloberfläche gezielt eingestellt wird. Beispielsweise kann die Stärke der antimikrobiellen Wirkung des hybriden Partikelsystems durch entsprechende Wahl der Abscheidungsbedingungen für die beiden Metalle auf der Oberfläche des Trägermaterials gesteuert werden, wobei die Flächenanteile der beiden Metalle auf der Hybridoberfläche gegeneinander verändert werden. Die für gewünschte antimikrobielle Wirkung des erfindungsgemäßen partikulären Hybridmaterials gesuchte Oberflächenzusammensetzung lässt sich anhand geeigneter mikrobiologischer Methoden, wie beispielsweise durch Wachstumskurven, anhand der Variation der Partikelzusammensetzung und - aufbau ermitteln.

In weiterer vorteilhafter Ausgestaltung des erfindungsgemäßen Verfahrens ist vorgesehen, dass das jeweilige Metall sequenziell oder gleichzeitig mittels elektrochemischer Abscheidung, chemisch-reduktiver Abscheidung, elektrophoretischer Beschichtung, PVD-, CVD- und/oder Sol-Gel-Verfahren auf das Trägermaterial aufgebracht wird.

Die Erfindung betrifft des Weiteren ein Hybridmaterial mit antimikrobieller Wirkung, das mittels des oben beschriebenen Verfahrens hergestellt wurde.

Die Erfindung betrifft auch die Verwendung des erfindungsgemäßen Hybridmaterials zur gemeinsamen Anwendung mit Werkstoffen und/oder Beschichtungsmaterialien, vorzugsweise Lacken, Farben, Putzen, Polymeren und/oder Cellulose. Dabei kann das Hybridmaterial auf beliebige Art und Weise mit den Werkstoffen und/oder Beschichtungsmaterialien assoziiert sein. Beispielsweise können die Werkstoffe und/oder Beschichtungsmaterialien mit den Hybridmaterial-Partikeln beschichtet oder mit diesen vermengt sein. Vorzugsweise sind die Partikel des erfindungsgemäßen Hybridmaterials in die Werkstoffe und/oder Beschichtungsmaterialien integriert.

Die hybride Cellulose-Silber-Ruthenium-Partikel-Variante des erfindungsgemäßen Hybridmaterials bietet überraschender Weise die Möglichkeit mit Hilfe der innovativen und umweltfreundlichen Lyocell-Technologie antimikrobielle Cellulose-Fasern und Cellulose-Folien auf Basis des erfindungsgemäßen antimikrobiellen Hybridsystems herzustellen, da das Cellulose-Silber-Ruthenium-Partikel-Additiv, trotz seiner katalytischen Aktivität, keinen entscheidenden Einfluss auf die Zersetzungstemperatur des im Lyocell-Prozess verwendeten Lösungsmittels (N-methymorpholine N-Oxid (NMMO)) nimmt und somit in dem Lyocell-Prozess verarbeitbar ist. Im Lyocell-Prozess löst sich der Trägerwerkstoff Cellulose im NMMO auf und setzt die auf den Cellulose-Fasern abgeschiedenen Silber-Ruthenium-Partikel in dem Cellulose-haltigen Lösemittel gleichmäßig verteilt frei, so dass daraus antimikrobielle Lyocell-Fasern für die Textilindustrie, aber auch für Vliesstoffe (Non-wovens) und weitere technische Anwendungen wie Folien, z. B. für Verpackungen, hergestellt werden können.

Mikropartikel zur Bildung eines antimikrobiell wirkenden Pulvers, welche Partikel aus einem ersten Metall umfassen, die mit einer clusterförmigen, nanoporösen und/oder mikrorissigen Schicht beschichtet sind, die ein zweites Metall umfasst, wobei die Partikel aus dem ersten Metall einen mittleren Durchmesser von höchstens 50 µm, vorzugsweise höchstens 10 µm, aufweisen. Eine besondere Ausführungsform der Erfindung ist gegeben, wenn eine der beiden aktiven Komponenten (Metalle) des Hybridsystems gleichzeitig sowohl Oberfläche als auch Trägermaterial ist. Das trifft allein aus wirtschaftlichen Gründen nur auf sehr kleine Edelmetallträgerpartikel zu (z.B. 0,1 - 50 µm, vorzugsweise < 5 µm). Bei Verarbeitungsprozessen zur Integration des erfindungsgemäßen hybriden antimikrobiellen Partikelsystems (z.B. in bestimmte Kunststoffe), die bei hohen Temperaturen stattfinden müssen, ist diese hybride Systemvariante eine Option.

Dazu müssen die als Trägermaterial eingesetzten Metallpartikel entsprechend klein sein, damit die Kosten für das hybride Partikelsystem aufgrund des günstigeren Oberflächen-Volumenverhältnisses durch entsprechend kleinere Mengen an Edelmetall überkompensiert werden kann.

In vorteilhafter Ausgestaltung der erfindungsgemäßen Mikropartikel ist vorgesehen, dass das erste Metall Silber und das zweite Metall ein Metall aus der Gruppe bestehend aus Ruthenium, Iridium, Vanadium, Mangan, Nickel, Eisen, Zink, Cobalt, Cer, Molybdän und Wolfram ist, oder dass das erste Metall ein Metall aus der Gruppe bestehend aus Ruthenium, Iridium, Vanadium, Mangan, Nickel, Eisen, Zink, Cobalt, Cer, Molybdän und Wolfram und das zweite Metall Silber ist.

Die Erfindung betrifft auch ein Verfahren zur Herstellung von Mikropartikeln mit antimikrobieller Wirkung, welches die folgenden Schritte umfasst:
a) Dispergieren von Silberpartikeln, die einen mittleren Durchmesser von höchstens 50 µm aufweisen, in einer alkalischen Lösung,
b) Zugeben einer Ruthenium(III)chlorid-Lösung und eines Reduktionsmittels in die Dispersion gemäß Schritt a), und
c) Abtrennen der Mikropartikel aus der Dispersion gemäß Schritt b).

In vorteilhafter Ausgestaltung des erfindungsgemäßen Verfahrens ist vorgesehen, dass das Reduktionsmittel Natriumborhydrid, Hydrazin und/oder ein Hydraziniumsalz, und/oder Hydroxylamin und/oder ein Hydroxylammoniumsalz ist.

Die Erfindung umfasst ferner auch Mikropartikel zur Bildung eines antimikrobiell wirkenden Pulvers, die mittels des oben beschriebenen Verfahrens hergestellt wurden.

Die erfindungsgemäßen Mikropartikel können in vorteilhafter Weise gemeinsam mit Werkstoffen und/oder Beschichtungsmaterialien, vorzugsweise Lacken, Farben, Putzen, Polymeren und/oder Cellulose angewendet werden. Dabei können die Mikropartikel auf beliebige Art und Weise mit den Werkstoffen und/oder Beschichtungsmaterialien assoziiert sein. Beispielsweise können die Werkstoffe und/oder Beschichtungsmaterialien mit den Mikropartikeln beschichtet oder mit diesen vermengt sein. Vorzugsweise sind die Mikropartikel in die Werkstoffe und/oder Beschichtungsmaterialien integriert.

Die erfindungsgemäßen partikulären Materialien eignen sich z. B. dazu, Lacke und Farben, Putze, Polymere, Textilien und Verpackungsmaterialien mit antimikrobiellen Eigenschaften auszustatten. Als Trägermaterialien steht prinzipiell ein großes Spektrum an Materialien wie Metalle bzw. Metalloxide, keramisch/mineralische oder Polymer-Werkstoffe zur Verfügung. Vorteilhaft ist ein hybrides antimikrobiell wirkendes Partikelsystem besonders dann, wenn neben der Wirkkomponente, die weiteren Bestanteile des Hybridsystems zusätzliche positive Eigenschaften einbringen können, die die Wirkung, die Verarbeitung oder die Integration in das gewünschte Halbzeug oder das fertige Produkt unterstützen oder verbessern können.

"Halbelement" im Sinne der Erfindung bezeichnet einen Teil eines galvanischen Elements, der dieses in Verbindung mit mindestens einem weiteren Halbelement bildet. Ein Halbelement umfasst dabei eine Metallelektrode, die sich zumindest teilweise in einem Elektrolyten befindet.

"Galvanisches Element" im Sinne der Erfindung bezeichnet die Kombination von zwei unterschiedlichen Metallen, die in einem gemeinsamen Elektrolyten jeweils eine Elektrode (Anode bzw. Kathode) bilden. Stehen die beiden Metallelektroden miteinander in direktem Kontakt oder sind sie über einen Elektronenleiter elektrisch leitend miteinander verbunden, gibt das unedlere Metall mit dem niedrigeren Redoxpotential (Elektronendonator, Anode) Elektronen an das edlere Metall mit dem höheren Redoxpotential (Elektronenakzeptor, Kathode) ab und setzt in Folge dessen Ionen (Metallkationen) in den Elektrolyten frei, die dann durch den Elektrolyten zur Kathode wandern und sich dort absetzen.

"Elektrolyt" im Sinne der Erfindung bezeichnet einen Stoff (z. B. Ionen in wässriger Lösung), der unter dem Einfluss eines elektrischen Feldes durch die gerichtete Bewegung von Ionen elektrischen Strom leitet.

"Werkstoff im Sinne der Erfindung bezeichnet ein Material, aus dem ein Teil, Bauteil, Bauelement oder eine Baugruppe eines Gegenstands bzw. Produkts besteht. Insbesondere umfasst der Begriff "Werkstoff" u.a. Teile aus mindestens einem Polymer (Kunststoff; einschl. Folien als Verpackungsmaterial), Textilien (natürliche und/oder synthetische Textilfasern; gewebte, gewirkte, gestrickte und geflochtene Stoffe), Vliesstoffen, Metallen, Glas und Keramik.

"Beschichtungsmaterial" im Sinne der Erfindung bezeichnet ein Material oder einen Stoff, mit dem ein Gegenstand bzw. Produkt zumindest teilweise bedeckt ist bzw. werden kann. Das Beschichtungsmaterial kann dabei in einer oder mehreren (vorzugsweise dünnen) Schicht(en) auf den Gegenstand bzw. das Produkt aufgebracht sein bzw. werden. Insbesondere umfasst der Begriff "Beschichtungsmaterial" u.a. flüssige oder pastöse Beschichtungsstoffe wie z.B. Lacke, Farben und Putze, sowie feste Beschichtungsstoffe wie z.B. Pulver und Folien.

"Metall" im Sinne der Erfindung bezeichnet Atome eines chemischen Elements des Periodensystems der Elemente (alle Elemente, die keine Nichtmetalle sind), die mittels metallischer Bindungen ein Metallgitter und dadurch ein makroskopisch homogenes Material bilden, das sich u.a. durch eine hohe elektrische Leitfähigkeit und eine hohe Wärmeleitfähigkeit auszeichnet. Der Begriff "Metall" umfasst auch Legierungen, die mindestens zwei unterschiedliche Metalle umfassen, Metallverbindungen wie z.B. Metalloxide, Metalloxyhydrate, Metallhydroxide, Metalloxyhydroxide, Metallhalogenide und Metallsulfide, sowie Kombinationen von Metallen und entsprechenden Metallverbindungen.

Die Erfindung wird im Weiteren anhand der folgenden Abbildungen und Beispiele exemplarisch näher erläutert.

### Kurze Beschreibung der Abbildungen

**Figur 1** zeigt eine schematische Abbildung einer beispielhaften Ausführungsform des erfindungsgemäßen Hybridmaterials.
**Figur 2** zeigt fotografische Abbildungen verschiedener antimikrobieller Varianten des erfindungsgemäßen Hybridmaterials, die auf versilberten Glasperlen S3000S der Firma Potters Industries Inc. mit einem mittleren Durchmesser von ca. 40 µm präpariert wurden.
**Figur 3** zeigt REM-Aufnahmen von versilberten Glaspartikeln S3000S der Firma Potters Industries Inc. in 300-facher Vergrößerung (oben links) und in 10.000-facher Vergrößerung (oben rechts). Mit Ruthenium beschichtete Proben sind in 10.000-facher Vergrößerung abgebildet: Proben 513 (Mitte links), 514 (Mitte rechts), 515 (unten links) und 516 (unten rechts).
**Figur 4** zeigt ein Balkendiagramm der katalytischen Bildung von Wasserstoffperoxid an der Oberfläche der partikulären antimikrobiellen Hybridmaterialien 513, 514 und 515 gemäß Figur 3.
**Figur 5** zeigt eine fotographische Abbildung eines Hemmhoftests. Es wurde eine Suspensionskultur von E. coli-Bakterien (DSM 498) auf eine Agarplatte ausplattiert. Als Proben wurden versilberten Glaspartikel S3000S sowie die antimikrobiellen Hybridmaterialien 513, 514 und 515 gemäß Figur 3 auf den Agar aufgebracht und für 18 *h* bei 37 °C inkubiert.
**Figur 6** zeigt Wachstumskurven von MRSA-Kulturen (Quelle: Robert-Koch-Institut) in Anwesenheit der Glaspartikel S3000S und der antimikrobiellen Hybridmaterialien 513, 514 und 515 gemäß Figur 3.
**Figur 7** zeigt fotografische Abbildungen beispielhafter Ausführungsformen des erfindungsgemäßen Hybridmaterials.
   a) Unbeschichtetes Cellulose-Pulver;
   b) beschichtetes, antimikrobielles Cellulose-Pulver mit einem Silbergehalt von 20 Gew.-% sowie einem Rutheniumgehalt von 1 Gew.-%;
   c) Verteilung der beiden Metalle auf der Cellulosefaser; und
   d) Hemmhoftest erfindungsgemäß hergestelltem Pulver.
**Figur 8** zeigt Wachstumskurven von MRSA-Kulturen (Quelle: Robert-Koch-Institut) in Anwesenheit des erfindungsgemäßen Hybridmaterials (Pulvers) gemäß Figur 7.
   a) Ermittlung der minimalen Hemm-Konzentration; und
   b) Abhängigkeit der antimikrobiellen Effizienz der Cellulose-Partikel vom Ruthenium-Gehalt.
**Figur 9** zeigt fotografische Abbildungen, ein Balkendiagramm und eine Tabelle zur antimikrobiellen Wirksamkeit einer mittels eines Lyocell-Prozesses hergestellten Cellulose-Folie bzw. eines entsprechenden Fadens.
   a) Cellulose-Folie;
   b) Hemmhoftest zur antimikrobiellen Wirksamkeit des erfindungsgemäß hergestellten Cellulose-Fadens gegen *E*. *coli* (DSM 498); und
   c) antimikrobielle Wirkung eines partikulären Cellulose-basierten Silber-Ruthenium-Hybrids (720b) gegen *S*. *aureus* (DSM 799).
**Figur 10** zeigt eine grafische Darstellung (Kurve) eines Virus-Plaque-Tests zur Wirksamkeit einer Ausführungsform des erfindungsgemäßen Hybridmaterials gegen SARS-CoV-2 und den Feline Coronavirus (FCoV).
   a) Feline Coronavirus (FCoV); und
   b) SARS-CoV-2.
**Figur 11** zeigt fotografische Abbildungen einer beispielhaften Ausführungsform des erfindungsgemäßen Hybridmaterials (Mikropartikel bzw. antimikrobielles Pulver).
   a) Unbeschichtetes Silberpulver;
   b) Erfindungsgemäß beschchtetes antimikrobielles Pulver;
   c) REM-Aufnahme eines Pulverpartikels in 100.000-facher Vergrößerung.
   d) Hemmhoftest zur antimikrobiellen Wirksamkeit der erfindungsgemäßen Mikropartikel bzw. des Pulvers.
**Figur 12** zeigt eine Wachstumskurve von MRSA für erfindungsgemäße Mikropartikel gemäß **Figur 11b****.**
**Figur 13** zeigt fotographische Abbildungen einer weiteren beispielhaften Ausführungsform des erfindungsgemäßen Hybridmaterials (Mikropartikel bzw. antimikrobielles Pulver) auf katalytischer Basis.
   a) Pulver nach Abfiltrieren, Waschen und Trocknen;
   b) gemörsertes, schwarzes Pulver;
   c) REM-Aufnahme eines Pulverpartikels in 100.000-facher Vergrößerung; und
   d) Hemmhoftest zur antimikrobiellen Wirksamkeit der erfindungsgemäßen Mikropartikel bzw. des Pulvers.
**Figur 14** zeigt eine Wachstumskurve der Mikropartikel bzw. des Pulvers gemäß Figur 13.
**Figur 15** zeigt fotografische Abbildungen mehrerer Proben kommerzieller Fassadenfarbe, die mit steigenden Konzentrationen (0,1 Gew.-%, 0,5 Gew.-% und 1,0 Gew.-%) einer beispielhaften Ausführungsform des erfindungsgemäßen Hybridmaterials versetzt wurden, das auf Glaspartikeln präpariert wurde.
**Figur 16** zeigt fotografische Abbildungen mehrerer Proben eines kommerziellen Antifouling-Anstrichs, die mit steigenden Konzentrationen (2,0 Gew.-%, 4,0 Gew.-% und 8,0 Gew.-%) einer weiteren beispielhaften Ausführungsform des erfindungsgemäßen Hybridmaterials versetzt wurden, das auf Cellulose-Pulver präpariert wurde.
**Figur 17** zeigt fotografische Abbildungen von Proben aus Ultramid C33, die 1 Gew.-% einer beispielhaften Ausführungsform des erfindungsgemäßen Hybridmaterials enthalten, das mit kommerziellem Silberpulver präpariert wurde.
   a) Granulat;
   b) Platten;und
   c) Hemmhoftest der Proben gegen *E*. *Coli* Bakterien.
**Figur 18** zeigt eine fotografische Abbildung von Fasern aus Polyamid, die 3 Gew.-% einer beispielhaften Ausführungsform des erfindungsgemäßen Hybridmaterials auf katalytischer Basis enthalten (a) und ein Balkendiagramm zur antimikrobiellen Wirksamkeit dieser Fasern (b).
**Figur 19** zeigt fotografische Abbildungen eins erfindungsgemäß hergestellten antimikrobiellen Hybridmaterials, dessen Kern aus ferromagnetischem Eisenpulver besteht (a und b) sowie ein Balkendiagramm zur Lyse von gram-positiven *B*. *subtilis* Keimen durch dieses Hybridmaterial (c).
**Figur 20** zeigt fotografische Abbildungen einer beispielhaften Ausführungsform des erfindungsgemäßen Hybridmaterials, das durch starkes Rühren im Wasser gleichmäßig verteil ist.
   a) Partikel des Hybridmaterials ohne Nachbeschichtung; und
   b) Partikel des Hybridmaterials, die nachträglich mit einer Dopamin-Hydrochloridlösung (2 mg/ml) und einem Phosphatpuffer (0,1 M, pH 8,5) bei RT behandelt wurden.
**Figur 21** zeigt eine fotografische Abbildung eines Hemmhoftests zur antimikrobiellen Wirksamkeit einer beispielhaften Ausführungsform des erfindungsgemäßen Hybridmaterials auf Cellulose-Basis, dessen Wirksamkeit durch eine Nachbehandlung nicht beeinträchtigt wird.
**Figur 22** zeigt fotografische Abbildungen eines Cellulose-basierten antimikrobiellen Hybridmaterials, das in Siloxane integriert wurde und diese mit antimikrobieller Wirksamkeit ausrüstet.
   a) Siloxan-Coatings H 2084 und H 5055; und
   b) antimikrobielle Untersuchungsergebnisse für *E*. *coli* auf einem Agar mit einseitig Siloxan-beschichteten Polypropylen-Plättchen.

### Beschreibung beispielhafter und bevorzugter Ausführungsformen der Erfindung

Erfindungsgemäß wird das partikuläre Hybridmaterial auf der Basis eines Kernwerkstoffes (Trägermaterials) hergestellt, wobei zunächst eine erste geschlossene Schicht mit einem der beiden erfindungsgemäßen Elektrodenmetalle auf dem Kernwerkstoff (Metall, Glas, Keramik, Graphit, Polymer) aufgetragen wird. Im Anschluss daran wird das zweite Elektrodenmetall als nicht geschlossene, clusterförmige, poröse oder mikrorissige dünne zweite Schicht auf der ersten Elektrodenschicht aufgetragen. Diese Beschichtungen können mit konventionellen elektrolytischen Prozessen, chemisch-reduktiv oder über Abscheidungen aus der Gasphase erfolgen. Vorzugsweise werden chemisch-reduktive Verfahren angewendet, bei denen die Metalle durch chemische Reduktion auf dem gewählten Trägermaterial aufgetragen werden. Geeignete Reduktionsmittel sind beispielsweise Aldehyde, Ascorbinsäure, Hydrazin, Hydroxylamin oder Metallhydride. Um zu verhindern, dass das Reduktionsmittel die Metallionen bereits in der Lösung und nicht auf den Partikelkernen abscheidet, was die Lösung zersetzen und zu einem Metallverlust führen würde, können dem Elektrolyten geeignete Inhibitoren zugesetzt werden, die erfahrenem galvanischen Personal bekannt sind. Bei der Ruthenium-Abscheidung kann als geeigneter Inhibitor beispielsweise Ethylendiamin zugesetzt werden. In Abhängigkeit vom verwendeten Reduktionsmittel muss die Substratoberfläche mit einem Katalysator aktiviert werden. Da Silber die Zersetzung von Natriumborhydrid bewirkt, ist für diese Kombination keine zusätzliche Aktivierung notwendig.

Die Abscheidung der beiden Metalle auf dem Trägermaterial wird in einem zweistufigen Prozess durchgeführt, da beide Metalle i. d. R. galvanisch aus unterschiedlich zusammengesetzten Elektrolyten abgeschieden werden. Vorzugweise wird die chemisch-reduktive Metallabscheidung batch-weise durchgeführt, wobei die im Elektrolyten enthaltene Metallmenge vollständig auf den Partikelkernen abgeschieden wird. Die Überprüfung der vollständigen Ausarbeitung des Elektrolyten kann mit klassischen Analyseverfahren, wie der AAS oder ICP, erfolgen, was nicht nur für die Qualitätskontrolle, sondern insbesondere bei der Verwendung von Edelmetallen als antimikrobielle Schichtwerkstoffe unerlässlich ist. Um die gleichmäßige und vollständige Abscheidung der Metalle auf den Partikelkernen zu erreichen, ist die dosierte Zugabe der Metallverbindungen, Reduktoren sowie weiterer chemischer Zusätze in den Reaktor bei gleichzeitiger hoher Elektrolytbewegung, z. B. durch Rührer bzw. Mixer (Kneter bei Cellulose) durchzuführen. Temperierung bzw. Kühlung und klassische Elektrolytkontrollen wie Messung des pH-Wertes sind für die Qualitätssicherung der hybriden antimikrobiellen Partikel sowie die Prozesssicherheit von Bedeutung.

Die Nachbeschichtung des antimikrobiellen Hybridmaterials erfolgt in separaten Reaktoren, beispielsweise durch Zugabe unter gleichmäßigem Rühren zu einer wässrigen Lösung, die den Reaktanden enthält. Dabei findet an der Metalloberfläche des hybriden Systems beispielsweise durch Verwendung von Halogenid- oder Sulphid-haltigen wasserlöslichen Verbindungen, Ascorbinsäure, Chitosan, Polyethylenglykol, Polydopamin eine chemische Umsetzung oder Chemisorption an der Oberfläche der Metalle auf dem erfindungsgemäßen Hybridmaterial statt.

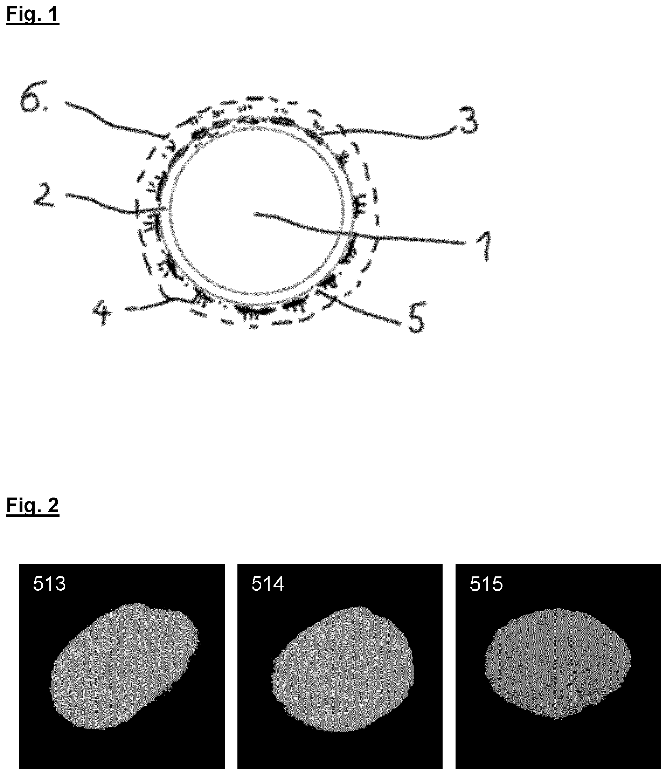

**Figur 1** zeigt schematisch den Aufbau des partikulären antimikrobiellen Hybridmaterials, dessen Form und Größe maßgeblich vom Partikelkern (1) bestimmt wird. Die Partikelgröße liegt i. d. R. bei < 50 µm, vorzugsweise < 5 µm. Bei faserförmigen Partikeln kann die Längenausdehnung, je nach Anwendung, bei < 1mm, vorzugweise < 60 µm, vorzugsweise, < 1 µm betragen.
Auf dem Kern (1) ist eine erste, weitgehend geschlossene Metallschicht (2), vorzugsweise eine Silberschicht, aufgetragen.
Über der ersten Schicht (2) des hybriden Systems ist das zweite Metall, vorzugsweise Ruthenium, als sehr dünne, nanoporöse Schicht (3) aufgetragen. Erste (2) und zweite Schicht (3) über dem Kern (1) sind so aufgebaut, dass Sauerstoff aus der feuchten Umgebung, an dem kathodischen Teil des aufgebrachten Materials der Hybridoberfläche reduziert wird und Sauerstoffradikale gebildet werden.
Die metallischen Komponenten der ersten (2) und zweiten Schicht (3) können durch chemische Reaktionen an der Oberfläche jeweils in eine Metallverbindung (4), z.B. ein Metallhalogenid oder Metallsulfid, umgewandelt werden bzw. durch eine oxidierende Lösung eine Oxidschicht ausbilden bzw. eine bestehende Oxidschicht in eine Mischoxidschicht mit veränderten Wertigkeiten umwandeln. Das hybride Schichtsystem auf den Partikeln kann alternativ mit einer chemisorbierten Ascorbinsäureschicht (5) versehen werden.
Das Hybridsystem kann zusätzlich mit einer polymeren Schicht (6) aus Chitosan, Polyethylenglykol oder Polydopamin versehen werden, die die antimikrobielle Wirkung nicht inhibieren.
Je nach dem benötigten Eigenschaftsprofil, können die chemisch-reduktiv abgeschiedenen Metalle und chemisch aufgebrachten anorganischen oder organischen Schichten in ihrer lateralen Verteilung, Dicke und Struktur variabel eingestellt werden.

**Figur 2** zeigt verschiedene antimikrobielle Varianten des erfindungsgemäßen Hybridmaterials, die auf versilberten Glasperlen S3000S der Firma Potters Industries Inc. mit einem mittleren Durchmesser von ca. 40 *µm* präpariert wurden. Silber dient hierbei als Anodenmaterial, auf dem als katalytisch aktives Kathodenmaterial Ruthenium mit unterschiedlichen Schichtdicken abgeschieden wurde. Für die Ruthenium-Beschichtung wurden die Glaskugeln in alkalischer Lösung unter starkem Rühren dispergiert. Dann wurden Lösungen von Ruthenium(III)chlorid und Natriumborhydrid als Reduktionsmittel zugeführt. Es wurden Partikel mit unterschiedlichen Schichtdicken an Ruthenium präpariert. Die berechnete mittlere Schichtdicke an Ruthenium beträgt für Probe 513 etwa 0,4 *nm,* für Probe 514 etwa 0,8 *nm* und für Probe 515 etwa 1,9 *nm.* Die Oberfläche der Proben wird mit zunehmender Schichtdicke an Ruthenium etwas dunkler. Die Probe 515 weist einen schwach bräunlichen Farbton auf.

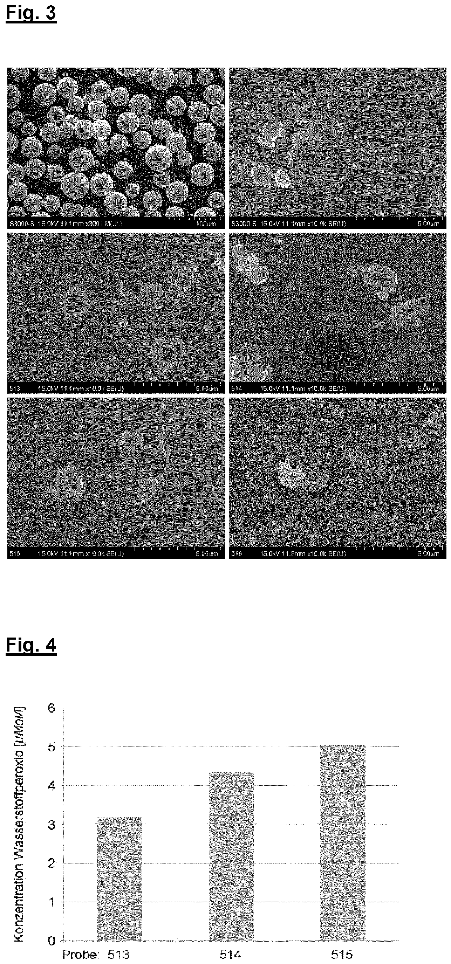

**Figur 3** zeigt REM Aufnahmen der chemisch-reduktiv beschichteten Partikel. Die versilberten Glaspartikel S3000S sind in 300-facher Vergrößerung (oben links) und in 10.000-facher Vergrößerung dargestellt (oben rechts) wiedergegeben. Weiterhin sind mit Ruthenium beschichtete Proben in 10.000-facher Vergrößerung abgebildet. Die Proben 513 (Mitte links), 514 (Mitte rechts) und 515 (unten links) weisen eine sehr gleichmäßige Beschichtung auf. Für die Probe 516 (unten rechts) mit einer mittleren Schichtdicke von etwa 9,4 *nm* ist die poröse Struktur der katalytisch aktiven Ruthenium-Beschichtung zu erkennen.

**Figur 4** zeigt die katalytische Bildung von Wasserstoffperoxid an der Oberfläche der partikulären antimikrobiellen Hybridmaterialien 513, 514 und 515. Es wurden jeweils 50 mg der Perlen in einer Lösung von Eisen(II)-Ionen und Xylenolorange für 1 *h* auf dem Schüttler bei 225 *U*/*min.* inkubiert. Durch die Bildung von Wasserstoffperoxid wurden die Eisen(II)-Ionen oxidiert. Die erzeugten Eisen(III)-lonen bilden mit Xylenolorange unmittelbar einen farbigen Komplex, dessen Konzentration photometrisch bei einer Wellenlänge von 585 *nm* bestimmt wurde.

Mit zunehmender Schichtdicke der Rutheniumschicht nimmt die Konzentration an gebildetem Wasserstoffperoxid zu.

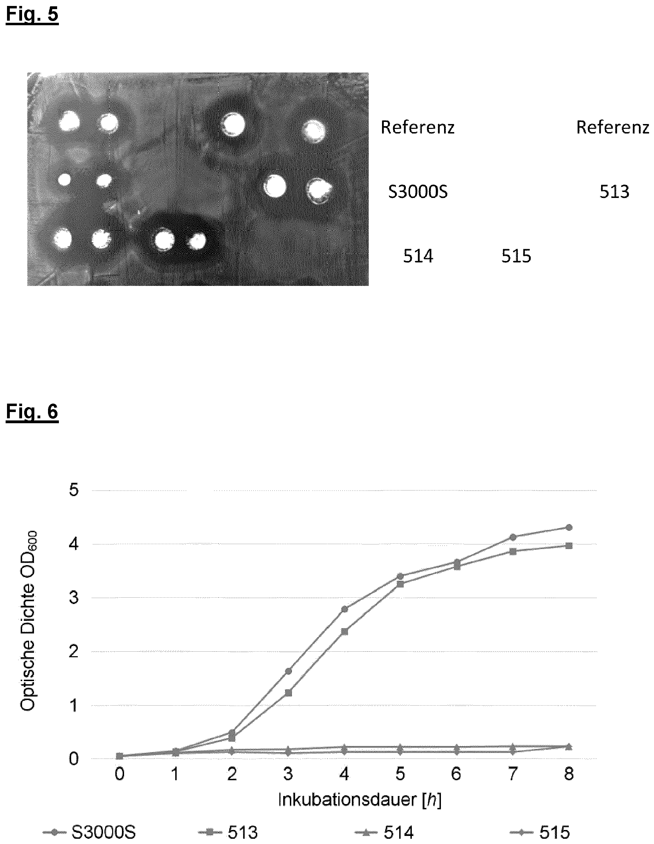

**Figur 5** zeigt die Bestimmung der antimikrobiellen Effizienz der Pulverproben nach dem Hemmhoftest. Es wurde eine Suspensionskultur mit 10⁷/*ml* Bakterien von *E*. *coli* (DSM 498) mit 50 *µl* ausplattiert. Die Proben wurden auf den Agar aufgebracht und für 18 *h* bei 37 °C inkubiert. Die versilberten Glaspartikel S3000S zeigen bereits eine mittlere antimikrobielle Aktivität. Die antimikrobielle Effizienz der Pulver 513, 514 und 515 ist sehr hoch. Ein Unterschied zwischen diesen Proben ist nach mikrobiologischem Agar-Test nicht erkennbar.

**Figur** 6 zeigt Wachstumskurven der Pulver S3000S, 513, 514 und 515. Hierfür wurden in einem Erlenmeyerkolben 30 *ml* einer Kultur von MRSA (Quelle: Robert-Koch-Institut) auf die optische Dichte von 0,1 eingestellt. Anschließend wurden jeweils 200 *mg* der verschiedenen Proben im Schüttelinkubator bei 37 °C und 150 *U*/*min* inkubiert. In stündlichen Intervallen wurde dann die optische Dichte (OD₆₀₀) der Proben bestimmt. Für die versilberten Glasperlen wurde nach dieser sehr empfindlichen antimikrobiellen Untersuchungsmethode keine Hemmung des Wachstums der MRSA Kultur ermittelt. Mit zunehmender Schichtdicke an Ruthenium auf den Perlen nimmt die Wachstumshemmung deutlich zu. Für die Probe 515 ist für die gewählte Einwaage des Pulvers eine vollständige Wachstumshemmung zu beobachten. Die minimale Hemm-Konzentration (MHK) für dieses Pulver beträgt somit 200 *mg.*

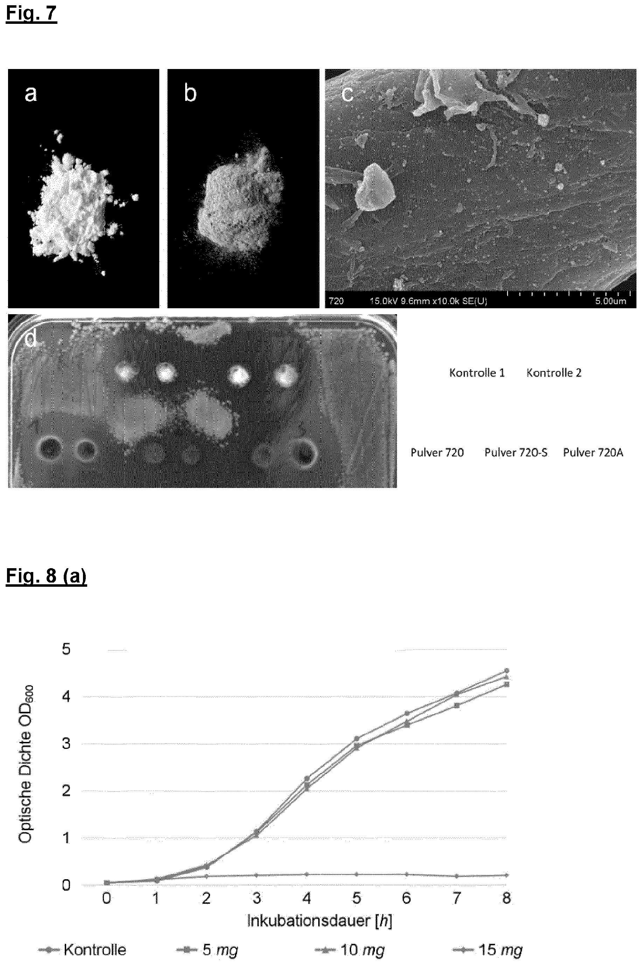

**Figur 7** zeigt ein antimikrobielles partikuläres Hybridmaterial, das auf Basis von Cellulose-Pulver mit einer mittleren Faserlänge von 60 *µm* präpariert wurde. Das Cellulose-Pulver wurde zunächst mit einer Lösung von Silbernitrat getränkt. Dann wurden die Silberionen durch Zugabe von Ascorbinsäure reduziert. Es entstand grauweißes, versilbertes Cellulose-Pulver. Das versilberte Cellulose-Pulver wurde anschließend in alkalischer Lösung unter starkem Rühren dispergiert. Dann wurden Lösungen von Ruthenium(III)chlorid und Natriumborhydrid als Reduktionsmittel zugesetzt. Es entstand dunkelgraues Pulver, dessen Farbe maßgeblich vom Gehalt an Ruthenium abhängt. **Figur 7a** zeigt das unbeschichtete Cellulose-Pulver und Figur **7b** zeigt das beschichtete, antimikrobielle Pulver mit einem Silbergehalt von 20 Gew.-% sowie einem Rutheniumgehalt von 1 Gew.-%. Die REM Aufnahme der Faseroberfläche in 10.000-facher Vergrößerung nach **Figur 7c** zeigt die gleichmäßige Verteilung der beiden Metalle auf der Cellulosefaser. Der Hemmhoftest nach **Figur 7d** zeigt, dass verschiedene Chargen des nach diesem Verfahren hergestellten Pulvers über eine hohe antimikrobielle Aktivität verfügen.

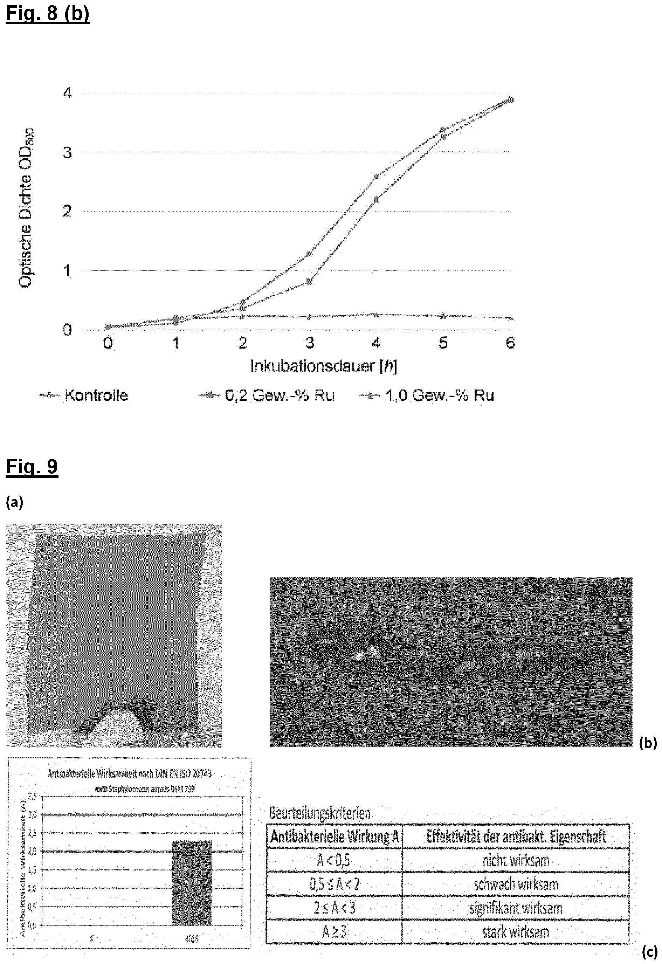

**Figur 8** **a** zeigt die Ermittlung der minimalen Hemm-Konzentration des antimikrobiellen Pulvers auf beschichteter Cellulose durch die Erstellung von MRSA-Wachstumskurven. Als Kontrolle diente eine Probe ohne Zusatz des antimikrobiellen Pulvers. Die minimale Hemm-Konzentration für das präparierte Pulver beträgt lediglich 15 *mg.* **Figur 8 b** zeigt, dass die antimikrobielle Effizienz der präparierten antimikrobiellen Partikel auf Cellulose-Basis ebenfalls von dessen Gehalt an Ruthenium abhängt. Für einen Ruthenium-Gehalt von 0,2 Gew-% ist nach der ermittelten Wachstumskurve lediglich eine leichte Inhibierung des Bakterienwachstums von MRSA zu erkennen, während für einen Ruthenium-Gehalt von 1,0 Gew.-% eine vollständige Inhibierung des Wachstums erfolgt. Als Kontrolle diente wiederum eine Probe ohne Zusatz des antimikrobiellen Pulvers. Die Einwaage der Pulver betrug jeweils 20 *mg.*

Obgleich alle hybriden Silber-Ruthenium-Partikel auf Cellulose-Trägermaterial eine antimikrobielle Wirkung zeigen, lässt sich die antimikrobielle Wirksamkeit anhand von Wachstumskurven mit MRSA-Keimen noch einmal hinsichtlich ihrer Stärke differenzieren. In **Tabelle 1** ist zu erkennen, dass sowohl die Rutheniumwie auch die Silber-Anteile (Mengen) Einfluss auf die Stärke der Wirksamkeit gegen MRSA nehmen. Über beide Metalle lässt sich die antimikrobielle Wirksamkeit des erfindungsgemäßen Hybridmaterials hinsichtlich der benötigten Stärke steuern. Tabelle 1 zeigt dabei analysierte Silber- und Ruthenium-Mengen [Gew. %] bezogen auf das gesamte Hybridmaterial, wobei die jeweilige antimikrobielle Stärke entsprechend der Legende mit (x+) bewertet wurde. Grundsätzlich ist festzustellen, dass letztlich alle Materialvarianten bei ausreichender Menge eine vollständige antimikrobielle Wirkung zeigen. Messtechnisch wurde daher die Partikelmenge solange reduziert, bis eine Differenzierung vorgenommen werden konnte, weil nicht alle Varianten eine vollkommene MRSA-Abtötung bewirken. Sofern bei geringerer Einwaage immer noch eine 100 %ige Wirkung einer Silber-Ruthenium-Variante feststellbar war, wurde diese als besonders wirksame Zusammensetzung eingeordnet. Somit wurde in Tabelle 1 entsprechend der Einwaagen die Bewertung für die angegebenen Varianten dargestellt.

**Tabelle 1**

| C-720 | Silber (Gew. %) | Ruthenium (Gew. %) | Antimikrobielle Wirksamkeit |
|---|---|---|---|
| 1.1 | 18,13 | 1,44 | +++++ |
| 2.2 | 10,93 | 1,01 | ++++ |
| 2.1 | 18,4 | 0,1 | +++ |
| 2.3 | 10,9 | 0,11 | ++ |

| | | | |
|---|---|---|---|
| +++++ = sehr stark; ++++ = stark; +++ = mittel; ++ = schwach | | | |

**Figur 9** **a** zeigt eine über den Lyocell-Prozess hergestellte antimikrobielle Cellulose-Folie, die durch Zugabe des erfindungsgemäß hergestellten antimikrobiellen Hybridmaterials auf Cellulose-Basis zum Lyocell-Prozess hergestellt worden ist. In gleicher Weise konnten nach dem Lyocell-Prozess auch antimikrobielle Cellulose-Fäden hergestellt werden. **Figur 9 b** zeigt die antimikrobielle Wirksamkeit des erfindungsgemäß hergestellten Cellulose-Fadens gegen *E*. *coli* (DSM 498) anhand des um den dünnen Faden herum ausgebildetem Hemmhofes. **Figur 9 c** zeigt die nach DIN EN ISO 20743 ermittelte signifikante antimikrobielle Wirkung gegen *S*. *aureus* (DSM 799) durch den Zusatz von lediglich 3 % des partikulären Cellulose-basierten Silber-Ruthenium-Hybrids (720b) zur Cellulose-Spinnlösung.

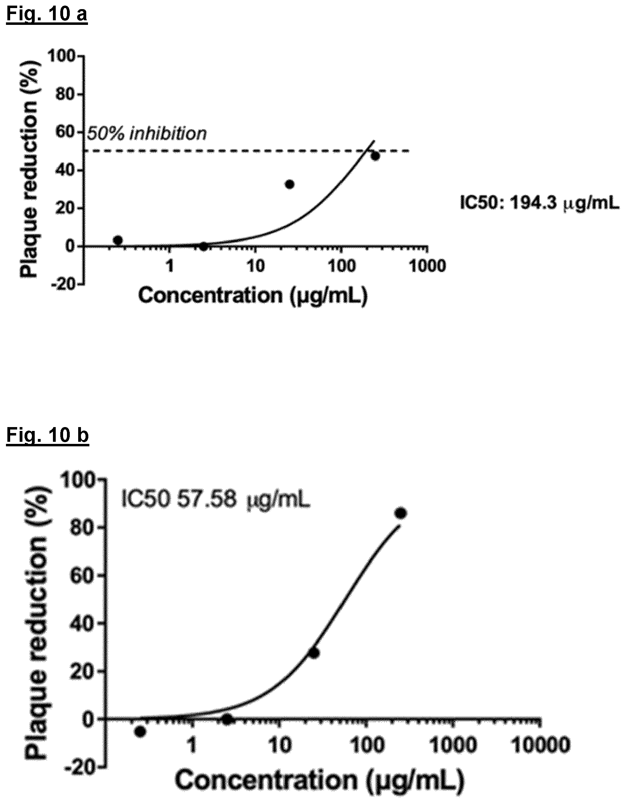

**Figur 10** zeigt die Wirksamkeit des erfindungsgemäß hergestellten partikulären antimikrobiellen Hybridmaterials gegen SARS-CoV-2 und den noch schwieriger zu inhibierenden Feline Coronavirus (FCoV). Die Tests wurden an der FU-Tier-Veterinärmedizin anhand des sogn. Plaque-Tests durchgeführt. Virus-Plaque-Tests bestimmen die Anzahl der Plaque-bildenden Einheiten (pfu) in einer Virusprobe, die ein Maß für die Virusmenge ist. Dieser Assay basiert auf einer mikrobiologischen Methode, die in Petrischalen oder Multiwell-Platten durchgeführt wird. Eine virale Plaque wird gebildet, wenn ein Virus eine Zelle innerhalb der fixierten Zell-Monolage infiziert. Die virusinfizierte Zelle lysiert und die Infektion wird auf benachbarte Zellen übertragen, wo sich der Infektion-Lyse-Zyklus wiederholt. Der infizierte Zellbereich bildet eine Plaque (ein Infektionsbereich, der von nicht infizierten Zellen umgeben ist), die mit einem Lichtmikroskop oder visuell sichtbar gemacht werden kann. Der Plaque-Reduktionsassay zeigt in **Figur 10** **a**, dass die erfindungsgemäß hergestellten Cellulose basierten antimikrobiellen Partikel bereits ab einer Konzentration von ca. 0,2 mg/ml antiviral gegen den Feline Coronavirus wirken (IC50: 50% der Viren abtötet). Bei der in **Figur 10 b** wiedergegebenen antiviralen Wirkung des erfindungsgemäßen antimikrobiellen Cellulose-basiertem partikulären Hybridmaterials gegen SARS-CoV-2 liegt der IC50 bei ca. 0,05 mg/ml sogar noch deutlich niedriger. Damit eignet sich das erfindungsgemäße antimikrobielle Hybridsystems für die Bekämpfung von Viren durch Integration der Partikel in Farben, Lacke, Kunststoffe.

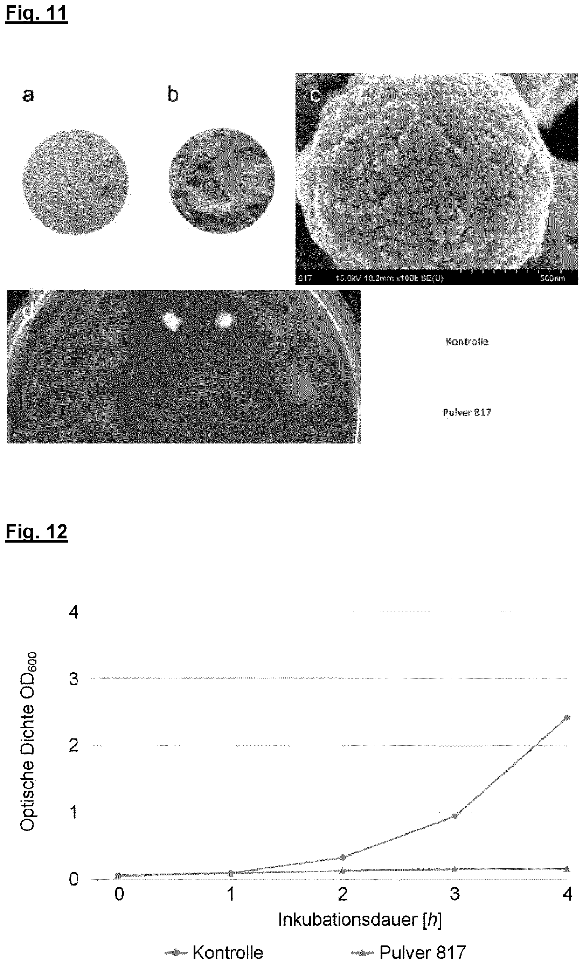

**Figur 11** zeigt Mikropartikel (antimikrobielles Pulver), die erfindungsgemäß auf Silberpartikeln hergestellt worden sind, wobei kommerziell erhältliches, sphärisches Silberpulver mit einer Partikelgröße von 1 *µm* - 100 *µm* mit Ruthenium beschichtet wurde. Das Silberpulver wurde in alkalischer Lösung unter starkem Rühren dispergiert. Dann wurden Lösungen von Ruthenium(III)chlorid und Natriumborhydrid als Reduktionsmittel zugesetzt. Es entstand dunkelgraues Pulver mit einem Rutheniumgehalt von 3,2 Gew.-%. **Figur 11** **a** zeigt das unbeschichtete Silberpulver und **Figur 11 b** das beschichtete, antimikrobielle Pulver. **Figur 11 c** zeigt die REM Aufnahme eines Pulverpartikels in 100.000-facher Vergrößerung mit einem Durchmesser von etwa 1 *µm*. Die poröse Struktur der Ruthenium-Beschichtung ist deutlich zu erkennen. In **Figur 11 d** ist der Hemmhoftest dargestellt, der eine hohe antimikrobielle Effizienz der erfindungsgemäßen Mikropartikel bzw. des Pulvers aufzeigt.

**Figur 12** zeigt die Wachstumskurve von MRSA für antimikrobielle Mikropartikel auf Basis von Silberpartikeln nach **Figur 11** **b**. Die minimale Hemm-Konzentration der Partikel beträgt 20 *mg.* Als Kontrolle diente eine Probe ohne Zusatz des antimikrobiellen Pulvers.

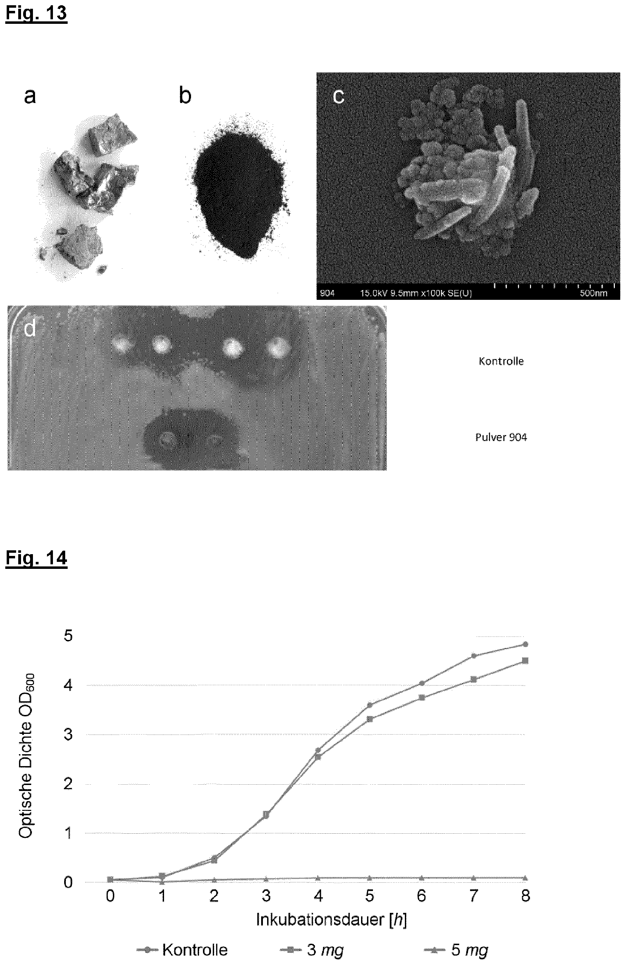

**Figur 13** zeigt erfindungsgemäße Mikropartikel (antimikrobielles Pulver) auf katalytischer Basis, wobei das als Grundlage verwendete Silberpulver zuvor durch einen chemisch-reduktiven Prozess hergestellt wurde. Als Reduktionsmittel wurde Ascorbinsäure verwendet. Zusätzlich wurde Gummi arabicum als Inhibitor eingesetzt. Das hergestellte Silberpulver wurde abfiltriert, gewaschen und direkt nach dem Abfiltrieren mit Ruthenium beschichtet. Hierbei wurden wiederum Lösungen von Ruthenium(III)chlorid und Natriumborhydrid als Reduktionsmittel zugesetzt. **Figur 13** **a** zeigt das Pulver nach dem Abfiltrieren, Waschen und Trocknen. Es bildeten sich größere, harte, goldfarbene Partikel. Diese wurden anschließend gemörsert. **Figur 13 b** zeigt das gemörserte, schwarze Pulver. Die Partikelgröße des Pulvers variiert von 0,1 *µm* - 5 *µm.* Der Rutheniumgehalt beträgt 3,2 Gew.-%. **Figur 13 c** zeigt die REM Aufnahme eines Pulverpartikels in 100.000-facher Vergrößerung. Der Durchmesser beträgt etwa 0,7 *µm.*

**Figur 14** zeigt die Wachstumskurve der Mikropartikel bzw. des Pulvers nach Figur 13. Die minimale Hemm-Konzentration des Pulvers beträgt lediglich 5 *mg.* Dieser kleine Wert beruht auf der großen relativen Oberfläche der kleinen Pulverpartikel. Als Kontrolle diente eine Probe ohne Zusatz des antimikrobiellen Pulvers.

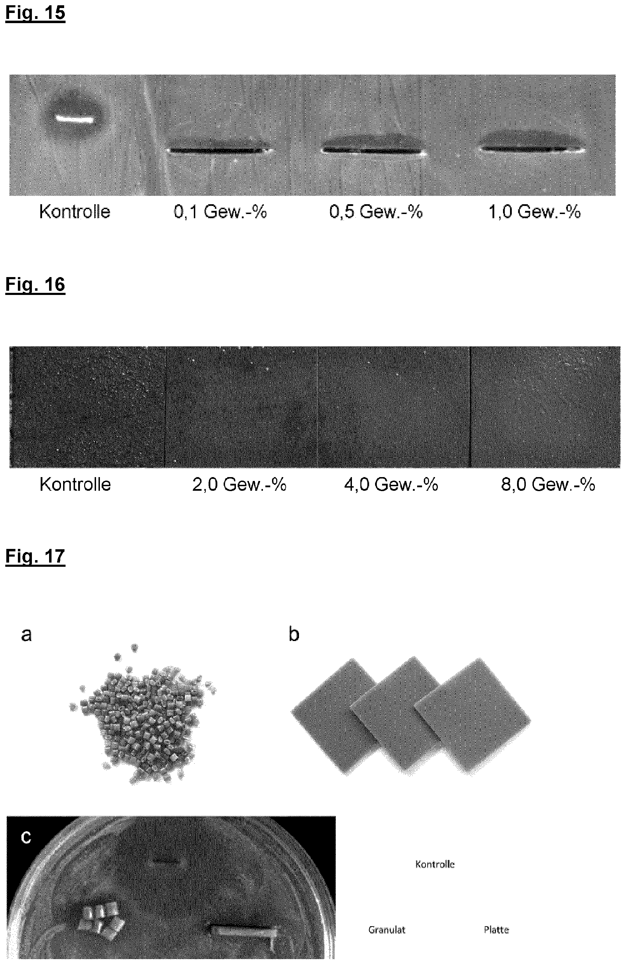

**Figur 15** zeigt mehrere Proben von kommerzieller Fassadenfarbe, die mit steigenden Konzentrationen eines erfindungsgemäß hergestellten antimikrobiellen Hybridmaterials versetzt wurden, das auf Glaspartikeln präpariert wurde. Die Konzentration des Pulvers beträgt 0,1 Gew.-%, 0,5 Gew.-% und 1,0 Gew.-%. Es wurde die antimikrobielle Aktivität der Proben gegen E. *Coli* Bakterien nach dem Hemmhoftest bestimmt. Alle Proben zeigen eine deutliche antimikrobielle Effizienz, die mit zunehmender Konzentration des Pulvers ansteigt. Die antimikrobielle Funktion des Hybridmaterials wird durch die Fassadenfarbe nicht inhibiert. Für die Filmkonservierung von Fassadenfarbe ist keine ausgeprägte Fernwirkung erforderlich, so dass für diese Anwendung deutlich geringere Konzentrationen des Hybridmaterial-Pulvers ausreichend sind. Als Kontrolle diente eine Vergleichsprobe mit hoher antimikrobieller Aktivität.

**Figur 16** zeigt mehrere Proben eines kommerziellen Antifouling-Anstrichs, die mit steigenden Konzentrationen an antimikrobiellem Hybridmaterial-Pulver versetzt wurden, das auf Cellulose-Pulver präpariert wurde. Die Konzentrationen des Pulvers betragen 2,0 Gew.-%, 4,0 Gew.-% und 8,0 Gew.-%. Als Kontrolle diente der Antifouling-Anstrich ohne Zusatz des antimikrobiellen Pulvers. Die Proben wurden für 6 Wochen in der Nordsee ausgelagert. Nach dieser Zeit zeigt die Kontrollprobe bereits einen deutlichen Bewuchs, während die Probe mit 2,0 Gew.-% an antimikrobiellem Pulver nur an vereinzelten Stellen einen Bewuchs aufweist. Mit steigender Konzentration an antimikrobiellem Hybridmaterial-Pulver nimmt der geringe Bewuchs weiter ab.

**Figur 17** zeigt Proben aus Ultramid C33, die 1 Gew.-% antimikrobielle Mikropartikel enthalten, das mit kommerziellem Silberpulver präpariert wurde. **Figur 17** **a** zeigt Granulat, und in **Figur 17 b** sind Platten dargestellt. **Figur 17** **c** zeigt den Hemmhoftest der Proben gegen *E*. *Coli* Bakterien. Beide Proben verfügen über eine mittlere antimikrobielle Aktivität. Eine Probe der Platte wurde für 18 Monate in VE Wasser inkubiert, das in regelmäßigen Abständen ausgewechselt wurde. Die antimikrobielle Aktivität der Probe ist nach der Inkubation unverändert, da deren antimikrobielle Aktivität nicht auf das Auslaugen eines Biozids hervorgerufen wird, sondern auf einem katalytischen Prozess beruht.

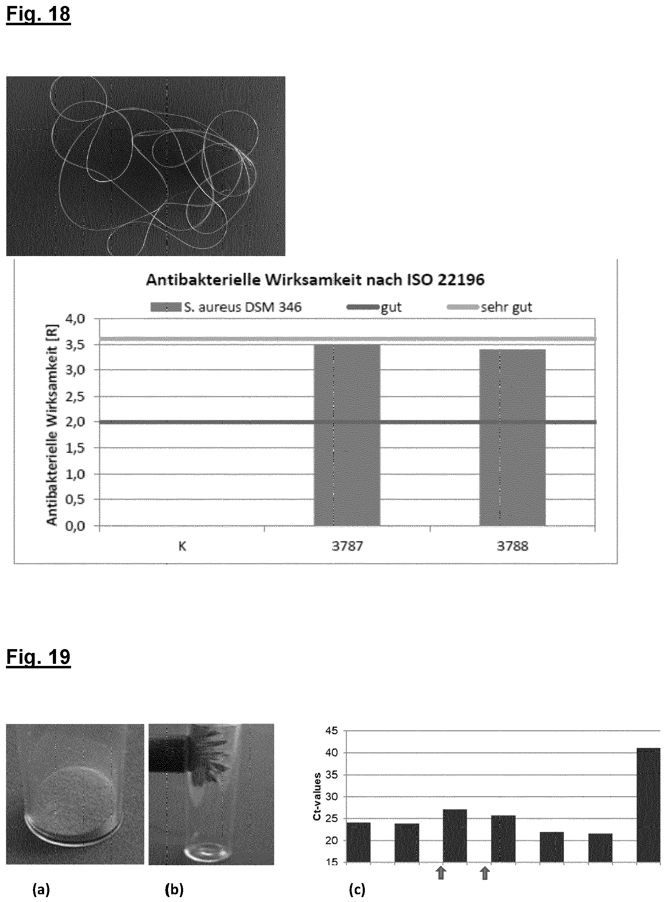

**Figur 18** zeigt Fasern aus Polyamid, die 3 Gew.-% antimikrobielle Mikropartikel auf katalytischer Basis enthalten **(****Figur 18 a****)**. Das verwendete Mikropartikel-Pulver wurde durch Reduktion von Silberionen in einem chemisch-reduktiven Prozess und anschließender Beschichtung mit Ruthenium hergestellt. Damit das Pulver in die Fasern eingearbeitet werden kann, muss die Größe der Partikel < 5 *µm* betragen. Die Fasern verfügen über eine gute antimikrobielle Aktivität **(****Figur 18 b****).**

**Figur 19** **a** zeigt ein erfindungsgemäß hergestelltes antimikrobielles Hybridmaterial, dessen Kern aus ferromagnetischem Eisenpulver hergestellt worden ist. In **Figur 19 b** ist zu sehen, wie die mit einem ferromagnetischen Kern ausgestattete hybriden Partikel durch eine Glaswand mit einem starken Permanentmagneten vollständig in dem Glasbehälter von außen manipulierbar ist. Ein solches Hybridsystem kann beispielsweise in biologischen Messapparaturen eingesetzt werden. In **Figur 19 c** sind Ergebnisse des erfindungsgemäßen antimikrobiellen Hybridpartikelsystems (Pfeile) für PCR-Genomanalyse an gram-positiven *B*. *subtilis* Keimen zu sehen, wobei das erfindungsgemäße antimikrobielle Partikelsystem die Aufgabe hatte, *B. subtilis* (ca. 1x10exp6 Zellen) in einer 21µl Suspension mit PBS für 15 min bei RT zu lysieren. Hier konnten die Partikel nach Versuchende vollständig mit Hilfe eines Magneten aus dem Messgerät wieder entfernt werden.

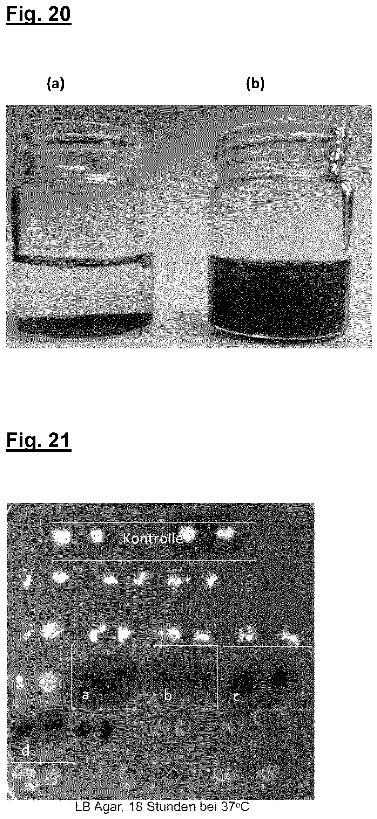

**Figur 20** zeigt ein erfindungsgemäß beschichtetes antimikrobielles Hybridmaterial, das durch starkes Rühren im Wasser gleichmäßig verteil ist. Die Partikel des Hybridmaterials in (a) sind ohne Nachbeschichtung, die Partikel des Hybridmaterials in (b) nachträglich in einer Dopamin-Hydrochloridlösung (2 mg/ml) und einem Phosphatpuffer (0,1M, pH 8,5) bei RT behandelt. Durch die Dopamin-Hydrochlorid-Behandlung wurde die Partikeloberfläche von dem zuvor hydrophoben Zustand in einen hydrophilen überführt. Das führte dazu, dass die ohne Nachbeschichtung mit Dopamin-Hydrochlorid hydrophoben Partikel nach dem Rühren sofort auf den Boden des Gefäßes sinken, während durch die hydrophilierten Partikel über längere Zeit eine stabile Dispersion aufrechterhalten werden kann (**Figur 20** **b**).

**Figur 21** zeigt ein erfindungsgemäß hergestelltes antimikrobielles Hybridmaterial auf Cellulose-Basis, dessen antimikrobielle Wirksamkeit durch eine Nachbehandlung nicht in der mikrobiellen Wirksamkeit beeinträchtigt wird. **Figur 21** **a** zeigt anhand des ausgeprägten Hemmhofes auf dem Agar die antimikrobielle Wirkung der erfindungsgemäß hergestellten hybriden Partikel auf Cellulose-Basis ohne Nachbehandlung gegen eine *E*. *coli* (DSM 498) Suspensionskultur (10exp7/ml mit 200 µl ausplattiert). In **Figur 21 b** zeigt der gleichgroße Hemmhof, dass die mit Ascorbinsäure nachbehandelten Cellulose basierten hybriden Partikel die antimikrobielle Wirkung der erfindungsgemäß hergestellten Partikel nicht negativ verändern. Gleiches gilt für die Nachbehandlungen mit Chitosan (**Figur 21** **c**) und Polydopamin (**Figur 21** **d**).

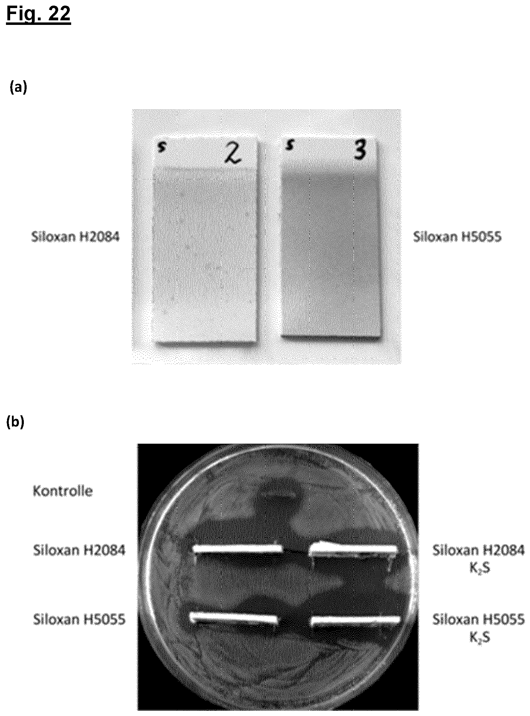

**Figur 22** zeigt ein Cellulose-basiertes antimikrobielles Hybridmaterial, das in Sol-Gel-Beschichtungswerkstoffe (z. B. Siloxane) integriert wurde und die Sol-Gel-Beschichtung mit antimikrobieller Wirksamkeit ausrüstet. Als Sol-Gel Beschichtungen wurden die beiden Siloxan-Coatings H 2084 und H 5055 (**Figur 22** **a**) verwendet. Als antimikrobieller Zusatz wurden hybride Cellulose basierten Partikel verwendet, die in einer Konzentration von 5 Gew.-% dem Siloxan-Coating beigemengt wurden. Nach dem Durchmischen wurde die Dispersion durch Sprühen auf den Probenträger aufgebracht. Anschließend erfolgte im Trockenschrank die Vernetzung der Beschichtung bei der entsprechenden Temperatur. Die Pulverpartikel zeigten hierbei eine gute Verteilung an der Probenoberfläche. In **Figur 22 b** sind antimikrobielle Untersuchungsergebnisse für *E*. *coli* auf dem Agar von einseitig Siloxan-beschichteten Polypropylen-Plättchen zu sehen, die mit 5 Gew.-% des erfindungsgemäßen Cellulose-basierten hybriden antimikrobiellen Hybridmaterials versehen waren. Der Hemmhofversuch mit *E*. *coli* (DSM 498) zeigt die hohe antimikrobielle Aktivität der beiden Proben. Dies gilt auch für Proben, die nachträglich für 5 min. in einer 1 %-igen Lösung von Kaliumsulfid inkubiert worden waren. Der teilweise unregelmäßige Hemmhof ist auf den ungleichmäßigen Sprühauftrag zurückzuführen. Es zeigt sich, dass die antimikrobielle Aktivität der erfindungsgemäß erzeugten antimikrobiellen Partikel von dem Siloxan-Coating kaum beeinträchtigt wird. Die nachträgliche Sulphid-Nachbehandlung führt in diesem Fall sogar zu einer Steigerung der antimikrobiellen Wirksamkeit des Dispersions-Coating-Systems. Da Siloxan-Schichten im auspolymerisierten Zustand hart und kratzfest sind, eignet sich dieses antimikrobielle Dispersions-Coating-System besonders für Oberflächen, die verschleißmäßig belastet werden.

## Patentansprüche

1. Hybridmaterial, das insbesondere als Additiv in Verbindung mit Materialien, Werkstoffen und/oder Beschichtungsmaterialien zur Erzeugung einer antimikrobiellen, antiviralen und/oder fungiziden Wirkung vorgesehen ist, und das Partikel umfasst, die jeweils mindestens ein Trägermaterial umfassen, das zumindest teilweise mit mindestens zwei unterschiedlichen Metallen beschichtet ist, wobei ein erstes Metall als clusterförmige, nanoporöse und/oder mikrorissige Schicht zumindest teilweise auf ein zweites Metall aufgebracht ist, oder wobei ein zweites Metall als clusterförmige, nanoporöse und/oder mikrorissige Schicht zumindest teilweise auf ein erstes Metall aufgebracht ist, **dadurch gekennzeichnet, dass** das erste Metall mindestens ein Übergangsmetallelement umfasst, das über mehrere Oxydationsstufen verfügt und über katalytisch aktive Zentren einen Wechsel der Oxidationsstufen erlaubt, und das zweite Metall mindestens einen elektrisch leitfähigen Silberhalbleiter umfasst, wobei die beiden Metallschichten zumindest mit ihren jeweiligen Oberflächen miteinander in elektrisch leitendem Kontakt stehen und dadurch eine antimikrobielle, antivirale und/oder fungizide Wirkung entfalten, wobei das Trägermaterial mindestens ein an den Werkstoff und/oder das Beschichtungsmaterial und deren Verwendung angepasstes Material umfasst.

2. Hybridmaterial nach Anspruch 1, **dadurch gekennzeichnet, dass** das Trägermaterial mindestens ein Material umfasst, das aus der Gruppe bestehend aus Cellulose, Glas, Metall oder einer Metalllegierung, Metalloxid, Keramik, Graphit und einem Polymer ausgewählt ist.

3. Hybridmaterial nach Anspruch 1 oder 2, **dadurch gekennzeichnet, dass** dieses mit organischen Polymeren, vorzugsweise Polyethylenglycol, Polydopamin und/oder Chitosan, und/oder mit Ascorbinsäure oder Ascorbinsäurederivaten modifiziert ist.

4. Hybridmaterial nach einem der Ansprüche 1 bis 3, **dadurch gekennzeichnet, dass** die Stärke der antimikrobiellen Wirkung durch ein Einstellen der Dicke mindestens einer der beiden Metallschichten, der Menge mindestens eines der beiden Metalle, und/oder der Flächenanteile der beiden Metalle auf der Partikeloberfläche gezielt einstellbar ist.

5. Hybridmaterial nach einem der Ansprüche 1 bis 4, **dadurch gekennzeichnet, dass** das Übergangsmetallelement mindestens ein Metall aus der Gruppe bestehend aus Ruthenium, Iridium, Vanadium, Mangan, Nickel, Eisen, Cobalt, Cer, Molybdän und Wolfram ist.

6. Hybridmaterial nach einem der Ansprüche 1 bis 5, **dadurch gekennzeichnet, dass** das erste Metall mindestens ein Metalloxid, Metalloxyhydrat, Metallhydroxid, Metalloxyhydroxid, Metallhalogenid und/oder mindestens ein Metallsulfid des Übergangsmetallelements umfasst.

7. Hybridmaterial nach einem der Ansprüche 1 bis 6, **dadurch gekennzeichnet, dass** der Silberhalbleiter mindestens ein Silberhalogenid oder Silbersulfid umfasst.

8. Hybridmaterial nach einem der Ansprüche 1 bis 7, **dadurch gekennzeichnet, dass** die Partikel sphärisch oder polyedrisch ausgebildet sind und einen mittleren Durchmesser von höchstens 100 µm, vorzugsweise höchstens 50 µm, insbesondere höchstens 5 µm, aufweisen, und/oder dass die Partikel faserförmig ausgebildet sind und eine mittlere Länge von höchstens 1 mm, vorzugsweise höchstens 100 µm, insbesondere höchstens 75 µm oder höchstens 60 µm, aufweisen.

9. Verfahren zur Herstellung eines Hybridmaterials mit antimikrobieller Wirkung, insbesondere des Hybridmaterials nach einem der Ansprüche 1 bis 8, welches die folgenden Schritte umfasst:
a) Bereitstellen oder Herstellen eines partikelförmigen Trägermaterials,
b) zumindest teilweises Aufbringen einer ersten Metallschicht auf das Trägermaterial, und
c) zumindest teilweises Aufbringen einer zweiten Metallschicht auf die in Schritt b) aufgebrachte erste Metallschicht, wobei die zweite Metallschicht clusterförmig, nanoporös und/oder mikrorissig auf die erste Metallschicht aufgebracht wird.

10. Verfahren nach Anspruch 9, **dadurch gekennzeichnet, dass** das Trägermaterial und/oder die Metallschichten nach Schritt a) und/oder Schritt c) mit organischen Polymeren, vorzugsweise Polyethylenglycol, Polydopamin und/oder Chitosan, und/oder mit Ascorbinsäure oder Ascorbinsäurederivaten modifiziert wird/werden.

11. Verfahren nach Anspruch 9 oder 10, **dadurch gekennzeichnet, dass** auf mindestens einer Metallschicht eine Verbindungsschicht erzeugt wird, die mindestens eine Metallverbindung des entsprechenden Metalls umfasst, welche aus der Gruppe bestehend aus Halogeniden, Oxiden und Sulfiden ausgewählt ist.

12. Verfahren nach einem der Ansprüche 9 bis 11, **dadurch gekennzeichnet, dass** die Stärke der antimikrobiellen Wirkung durch ein Einstellen der Dicke mindestens einer der beiden Metallschichten, der Menge mindestens eines der beiden Metalle, und/oder der Flächenanteile der beiden Metalle auf der Partikeloberfläche gezielt eingestellt wird.

13. Verfahren nach einem der Ansprüche 9 bis 12, **dadurch gekennzeichnet, dass** das jeweilige Metall sequenziell oder gleichzeitig mittels elektrochemischer Abscheidung, chemisch-reduktiver Abscheidung, elektrophoretischer Beschichtung, PVD-, CVD- und/oder Sol-Gel-Verfahren auf das Trägermaterial aufgebracht wird.

14. Hybridmaterial mit antimikrobieller Wirkung, hergestellt in einem Verfahren nach einem der Ansprüche 9 bis 13.

15. Verwendung des Hybridmaterials nach einem der Ansprüche 1 bis 8 oder nach Anspruch 14 zur gemeinsamen Anwendung mit Werkstoffen und/oder Beschichtungsmaterialien, vorzugsweise Lacken, Farben, Putzen, Polymeren und/oder Cellulose.

16. Mikropartikel zur Bildung eines antimikrobiell wirkenden Pulvers, welche Partikel aus einem ersten Metall umfassen, die mit einer clusterförmigen, nanoporösen und/oder mikrorissigen Schicht beschichtet sind, die ein zweites Metall umfasst, wobei die Partikel aus dem ersten Metall einen mittleren Durchmesser von höchstens 50 µm, vorzugsweise höchstens 10 µm, aufweisen.

17. Mikropartikel gemäß Anspruch 16, **dadurch gekennzeichnet, dass** das erste Metall Silber und das zweite Metall ein Metall aus der Gruppe bestehend aus Ruthenium, Iridium, Vanadium, Mangan, Nickel, Eisen, Cobalt, Cer, Molybdän und Wolfram ist, oder dass das erste Metall ein Metall aus der Gruppe bestehend aus Ruthenium, Iridium, Vanadium, Mangan, Nickel, Eisen, Cobalt, Cer, Molybdän und Wolfram und das zweite Metall Silber ist.

18. Verfahren zur Herstellung von Mikropartikeln mit antimikrobieller Wirkung, welches die folgenden Schritte umfasst:
a) Dispergieren von Silberpartikeln, die einen mittleren Durchmesser von höchstens 50 µm aufweisen, in einer alkalischen Lösung,
b) Zugeben einer Ruthenium(III)chlorid-Lösung und eines Reduktionsmittels in die Dispersion gemäß Schritt a), und
c) Abtrennen der Mikropartikel aus der Dispersion gemäß Schritt b).

19. Verfahren nach Anspruch 18, **dadurch gekennzeichnet, dass** das Reduktionsmittel Natriumborhydrid, Hydrazin und/oder ein Hydraziniumsalz, und/oder Hydroxylamin und/oder ein Hydroxylammoniumsalz ist.

20. Mikropartikel zur Bildung eines antimikrobiell wirkenden Pulvers, hergestellt in dem Verfahren nach Anspruch 18 oder 19.

21. Verwendung der Mikropartikel nach Anspruch 16, 17 oder 20 zur gemeinsamen Anwendung mit Werkstoffen und/oder Beschichtungsmaterialien, vorzugsweise Lacken, Farben, Putzen, Polymeren und/oder Cellulose.
